# EUROPEAN PATENT SPECIFICATION

(11) **EP 3 367 196 B1**
(45) Date of publication and mention of the grant of the patent: **03.09.2025**
(21) Application number: 17206765.4
(22) Date of filing: 12.12.2017
(51) Int. Cl.: G05B 19/418, B64F 5/10

(54) **AUTOMATED VALIDATION OF CONDITION OF ASSEMBLY**
AUTOMATISIERTE VALIDIERUNG EINES MONTAGEZUSTANDS
VALIDATION AUTOMATISÉE D'UN ÉTAT D'ASSEMBLAGE

(30) Priority: 23.02.2017 US 201715441082; 17.11.2017 US 201715816967
(43) Date of publication of application: 29.08.2018
(73) Proprietor: The Boeing Company, Arlington, VA 22202 (US)
(72) Inventor: Szarski, Martin, Chicago, 60606-1596 (US); Haeusler, Phillip, Chicago, 60606-1596 (US); Bain, David Michael, Chicago, 60606-1596 (US); Bain, Richard, Chicago, 60606-1596 (US); Glynn, Andrew K., Chicago, 60606-1596 (US); Steele, Peter Nathan, Chicago, 60606-1596 (US)
(74) Representative: Witte, Weller & Partner Patentanwälte mbB

(56) References cited:
- FR-A1- 2 945 630
- US-A1- 2015 012 171

## Description

### BACKGROUND

### 1. Field

The present disclosure relates to manufacturing and, more particularly, to performing an automated validation of a condition of assembly for a structure.

### 2. Background

Assembling a structure that is comprised of hundreds of thousands of parts may be a complex process that involves multiple stages of assembly. Accordingly, validating a condition of assembly over the course of these stages of assembly helps ensure quality control. A "condition of assembly" for a structure may be, for example, the degree to which a current build of the structure matches or conforms to a design specification for that structure. As one example, the assembly of an aircraft structure, such as a fuselage, may be a complex multi-stage process. Validating the condition of assembly of the fuselage, for example, after a particular stage of assembly may include determining whether the current build of the fuselage is within selected tolerances.

Currently, validating the condition of assembly of a complex structure, such as a fuselage, is typically performed manually. For example, a human operator may manually inspect a fuselage and compare the build of the fuselage to hundreds of printed engineering drawings of the fuselage, a computer aided design (CAD) model of the fuselage, or both. In some cases, this type of validation may require the operator to have special training and experience to maneuver through the drawings or model of the fuselage. Further, this type of evaluation may be more time-consuming and more prone to error than desired. Therefore, it would be desirable to have improved methods and systems for validating the condition of assembly for structures.

US 2015/0012171 A1, in accordance with its abstract, a method for inspecting assembly of components in a structure includes acquiring a visual representation of at least a portion of the structure, and saving an electronic file of the visual representation on a computer readable medium. A three-dimensional design of the structure, which contains information on a proper position of the components within the structure, is accessed. The visual representation is compared with the three-dimensional design using a computer, and a feedback indicating a result of the comparison is generated.

### SUMMARY

A method according to claim 1 is provided.

An apparatus according to claim 10 is provided.

### BRIEF DESCRIPTION OF THE DRAWINGS

**FIG. 1** is an illustration of an aircraft in accordance with an illustrative embodiment;
**FIG. 2** is a block diagram of a manufacturing environment in accordance with an illustrative embodiment;
**FIG. 3** is a block diagram of a pathway generator and a sensor system in accordance with an illustrative embodiment;
**FIG. 4** is an isometric view of a fuselage structure in accordance with an illustrative embodiment;
**FIG. 5** is an illustration of an image of a portion of a fuselage structure in accordance with an illustrative embodiment;
**FIG. 6** is an illustration of a report displayed on a graphical user interface in accordance with an illustrative embodiment;
**FIG. 7** is an illustration of a method for performing an automated validation of a condition of assembly for a structure in accordance with an illustrative embodiment;
**FIG. 8** is an illustration of a method for performing an automated validation of a condition of assembly for a structure in accordance with an illustrative embodiment;
**FIG. 9** is illustration of a method for performing an automated validation of a condition of assembly for an aircraft structure in accordance with an illustrative embodiment;
**FIG. 10** is an illustration of a method for establishing a pathway for performing an automated validation process in accordance with an illustrative embodiment;
**FIG. 11** is an illustration of a method for determining an optimal set of positions for performing an automated validation process in accordance with an illustrative embodiment;
**FIG. 12** is a block diagram of a data processing system in accordance with an illustrative embodiment;
**FIG. 13** is an illustration of an aircraft manufacturing and service method in accordance with an illustrative embodiment; and
**FIG. 14** is a block diagram of an aircraft in accordance with an illustrative embodiment.

### DETAILED DESCRIPTION

The illustrative embodiments recognize and take into account that automating the validation of the condition of assembly for a structure may allow this validation to be performed more quickly and accurately as compared to manual methods. Further, by automating the condition of assembly validation, the downtime needed for this validation process may be reduced. As one illustrative example, when the validation is to be performed between two stages of assembly, the validation process may reduce the downtime needed before the next stage of assembly can begin. Additionally, the illustrative embodiments provide a method and apparatus for automating the validation of a condition of assembly for a structure in a manner that limits the time and processing resources needed to perform this validation.

In one illustrative embodiment, a plurality of images of a structure may be generated using a sensor system. The structure may be, for example, a fuselage. Validating the condition of assembly for the fuselage may involve, for example, without limitation, confirming the presence of tens of thousands to hundreds of thousands of fasteners in specific locations. Each image generated may capture tens, hundreds, or thousands of fasteners.

The plurality of images of the fuselage may be registered to a computer model of the structure. Each image in the plurality of images may be segmented based on registration of the plurality of images to the computer model to form a plurality of image sections. A score may be generated for the condition of assembly of the fuselage based on whether each image section in the plurality of image sections meets a corresponding condition. The score may indicate whether the condition of assembly is valid.

In some embodiments, the sensor system that generates the plurality of images may be coupled to an automated guided vehicle. The automated guided vehicle may be moved along a predetermined path relative to the structure to allow the sensor system to generate the plurality of images. In particular, the automated guide vehicle may be moved along the predetermined path such that the sensor system may be moved into an optimal set of positions that enable an entirety of an area of the structure that is of interest to be captured using the fewest number of images. In this manner, the time and processing resources needed to perform the automated validation of the condition of assembly may be reduced. The illustrative embodiments may provide a computerized method and apparatus for efficiently identifying the optimal set of positions out of a plurality of test positions. The plurality of test positions may include, for example, without limitation, hundreds, thousands, or tens of thousands of test positions.

Referring now to the figures, in these illustrative examples, the same reference numeral may be used in more than one figure. This reuse of a reference numeral in different figures represents the same element in the different figures.

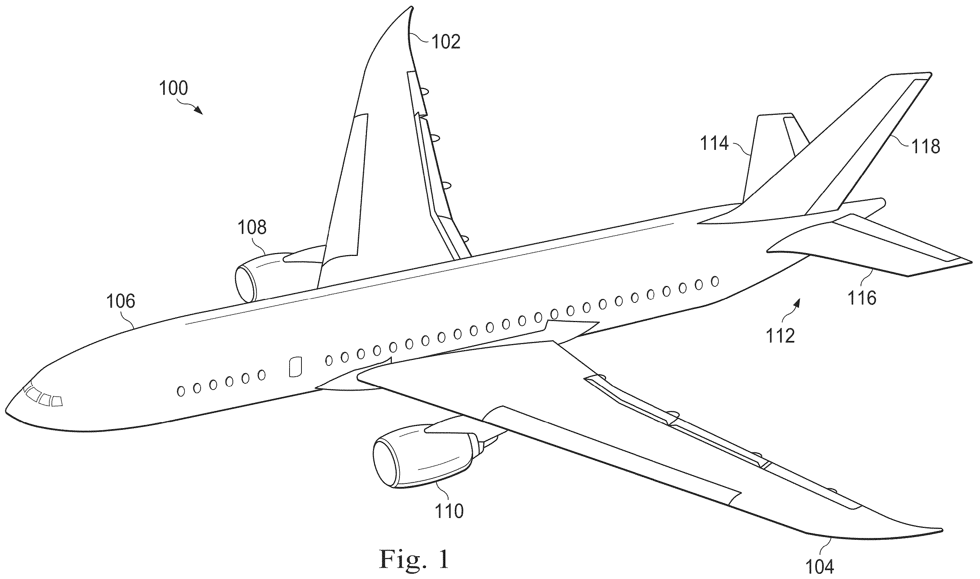

**FIG. 1** is an illustration of an aircraft, depicted in accordance with an illustrative embodiment. Aircraft **100** includes wing **102** and wing **104** attached to fuselage **106.** Aircraft **100** includes engine **108** attached to wing **102** and engine **110** attached to wing **104.** Aircraft **100** also includes tail section **112.** Horizontal stabilizer **114,** horizontal stabilizer **116,** and vertical stabilizer **118** are attached to tail section **112.**

Aircraft **100** is an example of an aircraft manufactured using methods and systems for automated validation of condition of assembly in accordance with the illustrative embodiments described below. For example, without limitation, fuselage **106** may be an example of one implementation of a structure built using a multi-stage process with automated validation of condition of assembly performed after at least one stage of assembly.

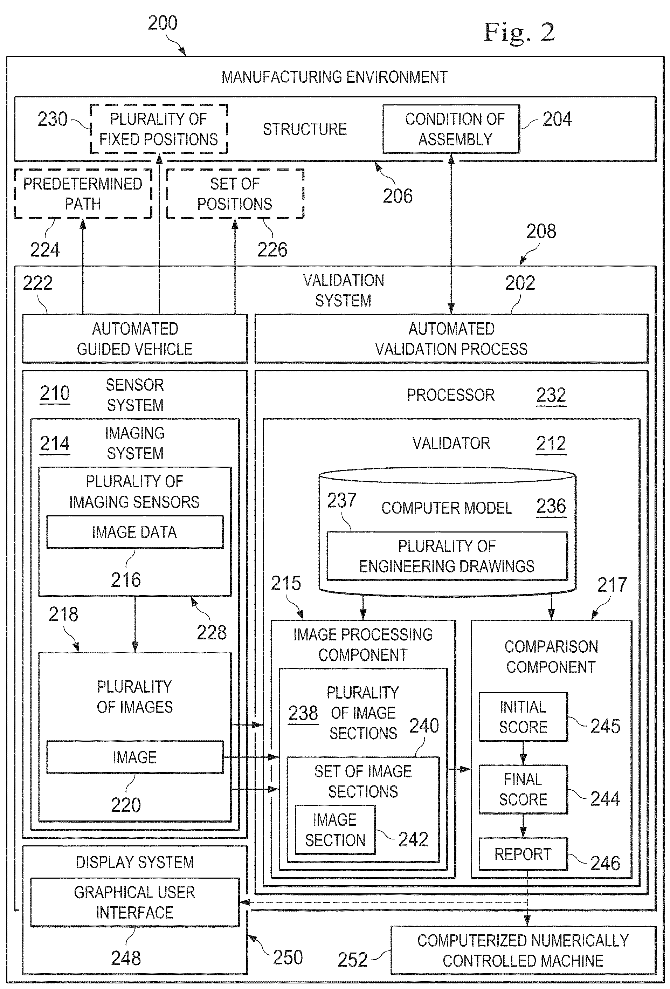

**FIG. 2** is a block diagram of a manufacturing environment depicted in accordance with an illustrative embodiment. Manufacturing environment **200** is an example of an environment in which automated validation process **202** may be performed. Automated validation process **202** may be an automated process by which condition of assembly **204** for structure **206** may be evaluated and determined to be either valid or invalid. In particular, automated validation process **202** may enable condition of assembly **204** for structure **206** to be evaluated with zero or minimal involvement of human operators. Condition of assembly **204** for structure **206** may be, for example, the degree to which a current build of structure **206** matches or conforms to a design specification for structure **206.**

Depending on the implementation, structure **206** may take a number of different forms. In one illustrative example, structure **206** takes the form of a fuselage structure that is being assembled to form fuselage **106** of aircraft **100** in **FIG. 1****.** In other illustrative examples, structure **206** may be a different type of aircraft structure, such as wing **102,** wing **104,** or tail section **112** of aircraft **100 in** **FIG. 1****.** In still other illustrative examples, structure **206** may be a spacecraft structure, a watercraft structure, a sub-assembly for a ground vehicle, or some other type of structure that is built using a multi-stage assembly process.

Validation system **208** may be used to perform automated validation process **202.** In one illustrative example, validation system **208** may be used to perform automated validation process **202** after a particular stage of assembly has been completed. This stage of assembly may include, for example, without limitation, the drilling of thousands to tens of thousands of holes in structure **206** and the installation of thousands to tens of thousands fasteners within these holes.

In this illustrative example, validation system **208** includes sensor system **210** and validator **212.** Sensor system **210** and validator **212** may be communicatively coupled. For example, sensor system **210** and validator **212** may be configured to communicate using one or more wired communications links, one or more wireless communications links, one or more optical communications links, or a combination thereof.

In this illustrative embodiment, sensor system **210** takes may take the form of imaging system **214.** Imaging system **214** may include one or more cameras configured to generate image data **216** for use in generating plurality of images **218** of structure **206.** An image of plurality of images **218,** such as image **220,** may capture a portion of structure **206.** This portion of structure **206** may be a large section of structure **206.** For example, without limitation, when structure **206** takes the form of a fuselage structure, image **220** may capture a section of a fuselage panel, an entire fuselage panel, multiple fuselage panels, a flooring, or some other portion of the fuselage structure.

In one illustrative example, imaging system **214** may be coupled to automated guided vehicle **222.** For example, without limitation, imaging system **214** may be removably attached to automated guided vehicle **222,** permanently affixed to automated guided vehicle **222,** built-in as part of automated guided vehicle **222,** or coupled to automated guided vehicle **222** in some other manner.

Automated guided vehicle **222** may be moved along predetermined path **224** relative to structure **206** to allow sensor system **210** to generate image data **216** at set of positions **226** relative to structure **206.** Set of positions **226** may be an optimal set of positions selected for allowing an entirety of an area of structure **206** that is of interest to be captured using the fewest number of images. Moving automated guided vehicle **222** relative to structure **206** may include moving automated guided vehicle **222** within an interior of structure **206,** along an exterior of structure **206,** along a platform located at a selected distance from structure **206,** along a flooring at a selected distance from structure **206,** along a track system relative to structure **206,** in some other suitable manner, or a combination thereof.

In other illustrative examples, imaging system **214** may comprise plurality of imaging sensors **228** that are positioned in plurality of fixed positions **230** relative to structure **206.** Plurality of fixed positions **230** may be an optimal plurality of positions selected for allowing an entirety of an area of structure **206** that is of interest to be captured using the fewest number of images and the fewest number of imaging sensors.

Sensor system **210** may send plurality of images **218** to validator **212** for processing. Depending on the implementation, validator **212** may be implemented using software, hardware, firmware, or a combination thereof. When software is used, the operations performed by validator **212** may be implemented using, for example, without limitation, program code configured to run on a processor unit. When firmware is used, the operations performed by validator **212** may be implemented using, for example, without limitation, program code and data stored in persistent memory to run on a processor unit.

When hardware is employed, the hardware may include one or more circuits that operate to perform the operations performed by validator **212.** Depending on the implementation, the hardware may take the form of a circuit system, an integrated circuit, an application specific integrated circuit (ASIC), a programmable logic device, some other suitable type of hardware device configured to perform any number of operations, or a combination thereof.

In one illustrative example, validator **212** takes the form of processor **232.** In some illustrative examples, validator **212** may be a computer system that comprises a single computer or multiple computers in communication with each other. In one illustrative example, validator **212** may include image processing component **215** and comparison component **217.**

Upon receiving plurality of images **218** from sensor system **210,** validator **212** registers plurality of images **218** to computer model **236** of structure **206.** Computer model **236** may be, for example, a computer aided design model of structure **206.** In other illustrative examples, computer model **236** may comprise plurality of digital engineering drawings **237** of structure **206.**

Validator **212** segments each of plurality of images **218** based on the registration of plurality of images **218** to computer model **236** to form plurality of image sections **238.** In particular, each image in plurality of images **218** may be segmented to form a set of image sections, such as set of image sections **240,** that is added to plurality of image sections **238.**

As one illustrative example, image **220** may be segmented to create set of image sections **240** based on the registration of image **220** to computer model **236.** For example, based on the registration of image **220** to computer model **236,** validator **212** may identify each location in image **220** at which a single feature of interest is expected to be seen. Validator **212** may segment image **220** to create an image section for each one of these locations. In this manner, each image section in set of image sections **240** captures a portion of structure **206** that is expected to have a single feature of interest.

Image section **242** may be an example of one of set of image sections **240.** Image section **242** may be expected to capture a feature of interest selected from one of, for example, without limitation, a hole, a fastener installed in a hole, an absence of a hole, an absence of a fastener, or some other type of feature. Image section **242** may be segmented from image **220** by being, for example, without limitation, snipped, cropped, or otherwise extracted from image **220.**

Depending on the implementation, set of image sections **240** formed from image **220** may make up the entirety of image **220** or only a portion of image **220.** For example, without limitation, in some cases, only the portions of image **220** expected to have features of interest may be snipped, cropped, or otherwise extracted from image **220.**

In some illustrative examples, the receiving of plurality of images **218** from sensor system **210,** the registration of plurality of images **218** to computer model **236,** and the segmenting of each image of plurality of images **218** may be performed by image processing component **215** of validator **212.** In some cases, only the registration and segmenting steps may be performed by image processing component **215.**

Once plurality of image sections **238** has been created, validator **212** may generate final score **244** for condition of assembly **204.** Validator **212** may generate final score **244** based on whether each image section in plurality of image sections **238** meets a corresponding condition. In some cases, comparison component **217** of validator **212** may perform a comparison of plurality of image sections **238** to computer model **236** to generate final score **244.**

Validator **212** generates initial score **245** by computing the percentage of image sections in plurality of image sections **238** that meet the corresponding condition for each respective image section. The corresponding condition used to evaluate each image section may be determined based on the corresponding portion of computer model **236** to which each image section, such as image section **242,** is registered. For example, the corresponding condition for a particular image section may be the presence or absence of a particular feature of interest, as specified by computer model **236.** The feature of interest may be, for example, without limitation, a hole or a fastener that has been installed in a hole.

Validator **212** compares image section **242** to the corresponding portion of computer model **236** to which image section **242** is registered. This corresponding portion of computer model **236** may indicate that the corresponding condition to be met is the presence of a fastener. Validator **212** may use one or more image recognition techniques to determine whether or not image section **242** includes a fastener.

In other illustrative examples, all image sections in plurality of image sections **238** may be evaluated based on the same corresponding condition. For example, the corresponding condition may be the presence of a fastener. In this example, initial score **245** may be the percentage of image sections in plurality of image sections **238** that include a fastener.

In some illustrative examples, validator **212** uses initial core **245** as final score **244** for condition of assembly **204.** Final score **244** may indicate that condition of assembly **204** is valid when final score **244** is above a selected threshold. The selected threshold may be, for example, without limitation, 84 percent, 88 percent, 92 percent, 95 percent, 97 percent, or some other percentage, depending on the implementation.

In other illustrative examples, validator **212** may make adjustments to initial score **245** based on whether one or more invalidating events have occurred to generate final score **244.** For example, based on the portion of computer model **236** to which image section **242** is registered and the importance of the corresponding condition, the failure of image section **242** to meet this corresponding condition may be considered an invalidating event. When an invalidating event occurs, validator **212** may adjust initial score **245** accordingly.

In some cases, a single invalidating event may cause validator **212** to adjust initial score **245** to 0 percent. Thus, a single invalidating event may cause condition of assembly **204** to be invalid despite initial score **245** being above the selected threshold. In other instances, each invalidating event may cause validator **212** to reduce initial score **245** by a selected amount. Some invalidating events may be weighted as more important than other invalidating events. For example, validator **212** may be configured to reduce initial score **245** by a greater amount based on the occurrence of one type of invalidating event as compared to another type of invalidating event. In still other illustrative examples, validator **212** may use initial score **245** as final score **244** but may generate an alert or flag when one or more invalidating events have occurred.

Validator **212** may create report **246** that includes final score **244,** as well as any alerts or flags that have been generated. In one illustrative example, validator **212** displays report **246** on graphical user interface **248** on display system **250.** Display system **250** may be communicatively coupled to validator **212.** In other illustrative examples, validator **212** may display only final score **244** and any alerts or flags that have been generated on graphical user interface **248.** Display system **250** may be part of validations system **208** or independent of validation system **208,** depending on the implementation.

In some illustrative examples, validator **212** sends report **246** to computerized numerically controlled machine **252** for processing. Report **246** may be used to adjust the programming for computerized numerically controlled machine **252** or generate a command for computerized numerically controlled machine **252.** As one illustrative example, computerized numerically controlled machine **252** may run a program that initiates a next stage of assembly when computerized numerically controlled machine **252** receives report **246** indicating that condition of assembly **204** for structure **206** is valid.

In this manner, validation system **208** allows automated validation process **202** to be performed efficiently. This automated validation process **202** may reduce the downtime in between stages of assembly. Further, using validation system **208** to validate condition of assembly **204** of structure **206** may improve the accuracy with which condition of assembly **204** is evaluated.

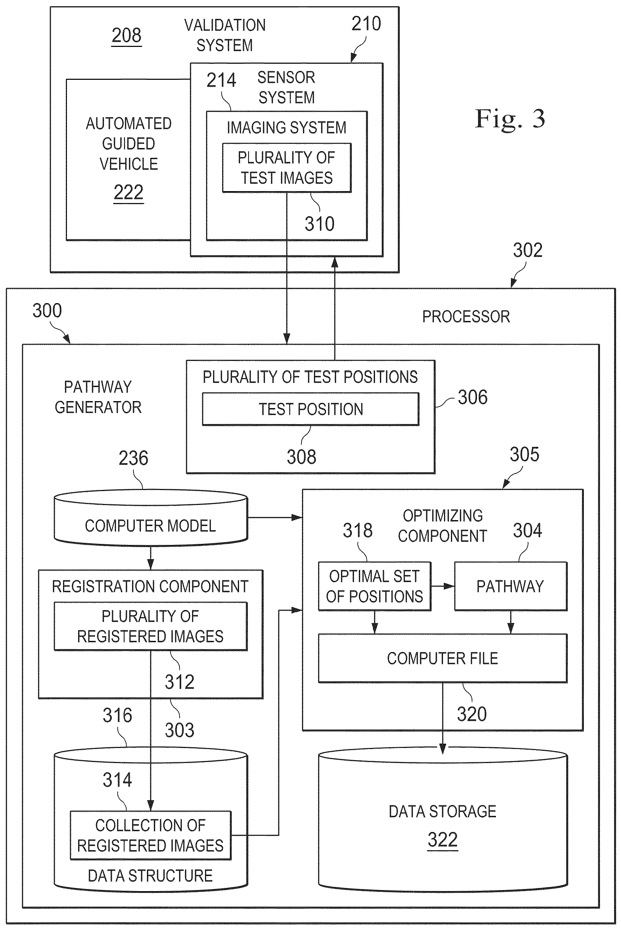

**FIG. 3** is a block diagram of a pathway generator and sensor system **210** from **FIG. 2****,** depicted in accordance with an illustrative embodiment. In this illustrative example, pathway generator **300** is implemented as part of validator **212** in **FIG. 2****.**

In other illustrative examples, pathway generator **300** may be implemented independently of validator **212.** For example, pathway generator **300** may be implemented in processor **302** within validation system **208.** Processor **302** may be communicatively coupled to processor **232** in **FIG. 2****.** Further, processor **302** may be communicatively coupled to sensor system **210.** In still other illustrative examples, pathway generator **300** may be implemented independently of validation system **208.**

Pathway generator **300** is used to establish pathway **304** for performing automated validation process **202 in** **FIG. 2****.** Pathway **304** may be used as the predetermined path **224 in** **FIG. 2****.** In one illustrative example, pathway generator **300** includes registration component **303** and optimizing component **305.**

In this illustrative example, sensor system **210** is coupled to automated guided vehicle **222.** Sensor system **210** is moved into plurality of test positions **306** relative to structure **206.** Plurality of test positions **306** may include, for example, without limitation, tens, hundreds, thousands, or tens of thousands of test positions, depending on the implementation. In one illustrative example, plurality of test positions **306** may include between **100** and **100**,000 test positions. Test position **308** is an example of one of plurality of test positions **306.** Test position **308** may comprise a location, an orientation, or both for sensor system **210.** Accordingly, test position **308** defines a unique field of view for sensor system **210** relative to structure **206.**

Sensor system **210** generates image data at each test position of plurality of test positions **306** to build plurality of test images **310.** Sensor system **210** then sends plurality of test images **310** to pathway generator **300** for processing.

Pathway generator **300** registers each test image of plurality of test images **310** to computer model **236** of structure **206** to form plurality of registered images **312.** In particular, registration component **303** of pathway generator **300** may register each test image of plurality of test images **310** to computer model **236.** Plurality of registered images **312** are added to collection of registered images **314.** In this illustrative example, collection of registered images **314** may be stored in data structure **316.** Data structure **316** may take the form of, for example, without limitation, a database, a data repository, associative memory, or some other type of data structure.

Pathway generator **300** determines which positions from plurality of test positions **306** will allow an entirety of an area of structure **206** that is of interest to be captured using the fewest number of registered images from collection of registered images **314.** The particular positions identified form optimal set of positions **318.** Optimal set of positions **318** may be used as set of positions **226 in** **FIG. 2****.** In one illustrative example, these above described steps in the identification of optimal set of positions **318** may be performed by optimizing component **305** of pathway generator **300.**

In this illustrative example, pathway generator **300** uses optimal set of positions **318** to establish pathway **304** for moving automated guided vehicle **222** relative to structure **206** to perform automated validation process **202.** For example, without limitation, pathway generator **300** may compute pathway **304** for moving automated guided vehicle **222** relative to structure **206** such that sensor system **210** may be moved into optimal set of positions **318** in a least amount of time. In some cases, the generation of pathway **304** is performed by optimizing component **305.**

Pathway generator **300** then generates computer file **320** that identifies pathway **304** for automated guided vehicle **222** and optimal set of positions **318** for sensor system **210.** In one illustrative example, the computer file **320** may be generated by optimizing component **305.**

In some illustrative examples, pathway generator **300** may send computer file **320** to validator **212** in **FIG. 2** for use in performing automated validation process **202** to validate condition of assembly **204** for structure **206.** In other illustrative examples, pathway generator **300** may store computer file **320** in data storage **322.** Data storage **322** may take the form of memory in communication with processor **302,** cloud storage, or some other type of data storage.

In these examples, computer file **320** may be retrieved by validator **212** from data storage **322** for use in performing automated validation process **202.** Using pathway **304** and optimal set of positions **318** identified in computer file **320** as predetermined path **224** for performing the automated validation process **202** may reduce the time and amount of processing resources needed to perform automated validation process **202.**

Pathway **304** and optimal set of positions **318** identified in computer file **320** may be used for performing automated validation process **202** for other structures. For example, validator **212** may retrieve computer file **320** for performing automated validation process **202** for a plurality of structures (not shown) that are being assembled based on computer model **236.** In other words, pathway **304** and optimal set of positions may be used to perform automated validation process **202** for other structures that match a same design specification as structure **206.**

The illustrations of manufacturing environment **200** in **FIG. 2****,** validation system **208** in **FIG. 2****,** and pathway generator **300** in **FIG. 3** are not meant to imply physical or architectural limitations to the manner in which an illustrative embodiment may be implemented. Other components in addition to or in place of the ones illustrated may be used. Some components may be optional. Additionally, the blocks may be presented to illustrate functional components. One or more of these blocks may be combined, divided, or combined and divided into different blocks when implemented in an illustrative embodiment.

For example, when automated guided vehicle **222** is moved through structure **206** in the form of a fuselage, such as fuselage **106** in **FIG. 1****,** automated guided vehicle **222** may be moved within the interior cylindrical portions of the fuselage. However, in other illustrative examples, when structure **206** takes the form of wing **102 in** **FIG. 1****,** automated guided vehicle **222** may be moved along the exterior surface of wing **102.** In this manner, automated guided vehicle **222** may be moved in different ways relative to structure **206** depending on the type of structure **206.**

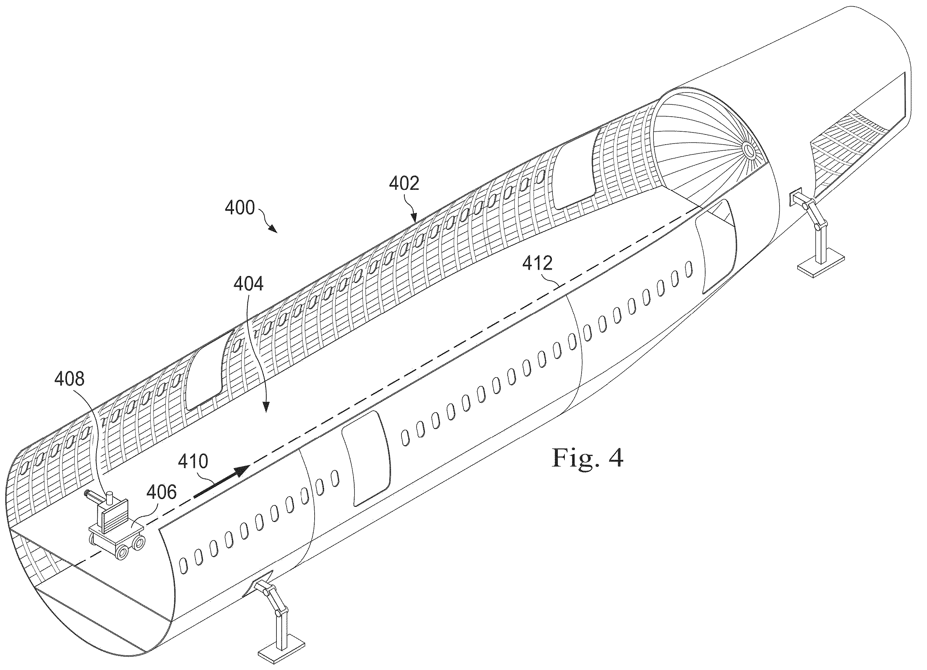

**FIG. 4** is an isometric view of a fuselage structure, depicted in accordance with an illustrative embodiment. Fuselage structure **400** may be an example of one implementation for structure **206** described in **FIG. 2****.** Further, fuselage structure **400** may be in the middle of an assembly process for building a fuselage, such as fuselage **106 in** **FIG. 1****.**

Fuselage structure **400** includes plurality of fuselage panels **402.** In this illustrative example, fuselage structure **400** may have top fuselage panels that are not shown such that interior **404** of fuselage structure **400** may be better seen.

Automated guided vehicle **406** may move through interior **404** of fuselage structure **400** to perform various operations using imaging system **408** attached to automated guided vehicle **406.** Imaging system **408** may be an example of one implementation for imaging system **214 in** **FIG. 2****.** In one illustrative example, imaging system **408** may be controlled to change orientation relative to fuselage structure **400** such that imaging system **408** can capture different view of interior **404.**

Depending on the implementation, imaging system **408** may have one or more degrees of linear freedom, one or more degrees of rotational freedom, or a combination thereof relative to automated guided vehicle **406.** Accordingly, imaging system **408** may have six degrees of freedom, three degrees of freedom, one degree of freedom, or some other number of degrees of freedom relative to automated guided vehicle **406.** For example, without limitation, imaging system **408** may be capable of moving with three rotational degrees of freedom relative to automated guided vehicle **406.**

In one illustrative example, automated guided vehicle **406** may be moved through interior **404** of fuselage structure **400** for the purpose of establishing a pathway, such as pathway **304** in **FIG. 3****,** for performing automated validation process **202** described in **FIG. 2****.** For example, without limitation, automated guided vehicle **406** may be moved along predetermined test pathway **410** relative to fuselage structure **400.** In this illustrative example, predetermined test pathway **410** may be a straight-line path along centerline **412** of fuselage structure **400.** In other illustrative examples, predetermined test pathway **410** may be a curved pathway, a zig-zag pathway, or some other type of pathway.

Further, automated guided vehicle **406** may be moved to various positions along predetermined test pathway **410** to allow imaging system **408** to be moved into a plurality of test positions. For example, without limitation, automated guided vehicle **406** may be moved to about 50 positions along predetermined test pathway **410.** At each of these 50 positions, imaging system **408** may be moved relative to automated guided vehicle **406** into some number of test positions. For example, without limitation, imaging system **408** may be moved into 10 or more test positions at each stop made by automated guided vehicle **406** along predetermined test pathway **410.** Each test position may comprise a test location and a test orientation relative to a reference coordinate system. This reference coordinate system may be a coordinate system for automated guided vehicle **406,** a coordinate system for fuselage structure **400,** or some other of coordinate system.

At each test position, imaging system **408** generates a test image. The plurality of test images generated by imaging system **408** may be sent to, for example, pathway generator **300** described in **FIG. 3** for processing. Pathway generator **300** may use these test images to establish pathway **304** for performing automated validation process **202** for fuselage structure **400.** Once pathway **304** has been established, pathway **304** may be used to perform automated validation process **202** for fuselage structure **400,** as well as other fuselage structures being assembled according to a same design specification as fuselage structure **400.**

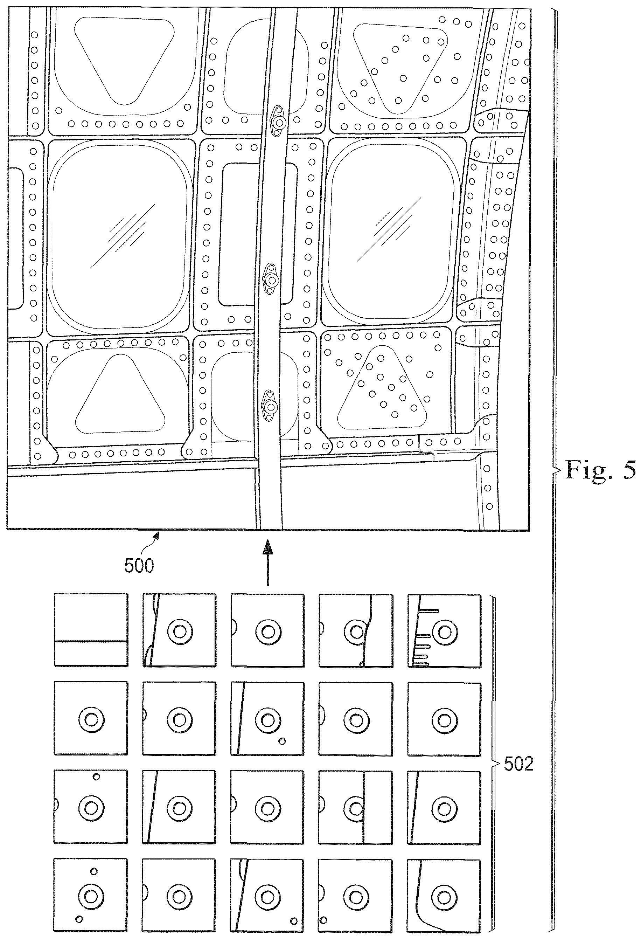

**FIG. 5** is an illustration of an image of a portion of fuselage structure **400** from **FIGS. 4-****5,** depicted in accordance with an illustrative embodiment. Image **500** may be an example of one implementation for image **220** described in **FIG. 2****.** Image **500** may be generated by, for example, imaging system **408** in **FIG. 4** within interior **404** of fuselage structure **400.**

Validator **212** from **FIG. 2** may register image **500** to a computer model for fuselage structure **400.** Based on this registration, validator **212** may identify the various portions of image **500** that are expected to have fasteners installed. Validator **212** may then segment image **500** into set of image sections **502.** For example, without limitation, validator **212** may snip, crop, or otherwise extract plurality of image sections **502** from image **500.** Set of image sections **502** may be an example of one implementation, for set of image sections **240** described in **FIG. 2****.**

Each image section of plurality of image sections **502** may then be analyzed to determine whether that image section meets a corresponding condition based on the computer model for fuselage structure **400.** For example, without limitation, the corresponding condition may be either a presence of a fastener or the absence of a fastener.

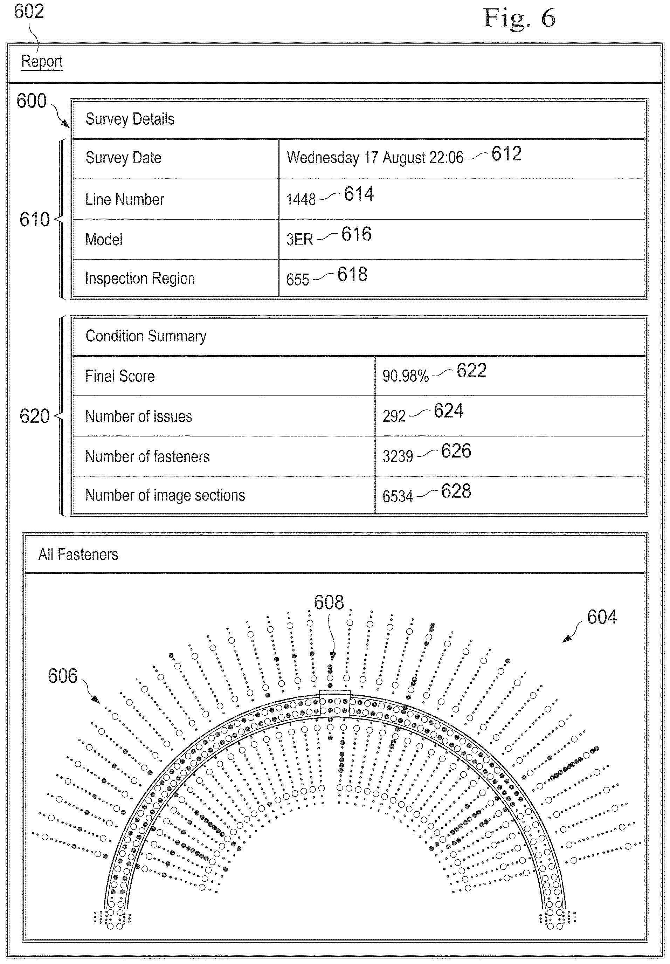

**FIG. 6** is an illustration of a report displayed on a graphical user interface, depicted in accordance with an illustrative embodiment. Report 600 is displayed on graphical user interface **602.** Report **600** may be an example of one implementation for report **246 in** **FIG. 2****.** Graphical user interface **602** may be an example of one implementation for graphical user interface **248 in** **FIG. 2****.** Report **600** may be generated by validator **212 in** **FIG. 2** after an automated validation of condition of assembly for fuselage structure **400 in** **FIG. 4** has been performed.

As depicted, report **600** includes diagram **604.** Diagram **604** may represent interior **404** of fuselage structure **400.** In this illustrative example, diagram **604** identifies plurality of expected fasteners **606,** which may be all of the fasteners that are expected to be present in fuselage structure **400** after a particular stage of assembly.

In this illustrative example, set of graphical indicators **608** may be used to indicate each fastener of plurality of expected fasteners **606** that is not present in fuselage structure **400.** In this manner, diagram **604** may allow a human operator viewing report **600** to easily and readily identify the locations on fuselage structure **400** that may require further attention.

Further, report **600** also includes general information **610.** For example, without limitation, general information **610** may include date **612,** line number **614,** model **616,** and inspection region **618.** Date **612** may identify the date on which the automated validation of the condition of assembly was performed. Line number **614** and model **616** may specifically identify fuselage structure **400.** Inspection region **618** may identify the particular region of fuselage structure **400** for which the automated validation of the condition of assembly was performed.

Additionally, report **600** includes condition summary **620.** Condition summary **620** may identify the results of the automated validation of the condition of assembly. For example, without limitation, condition summary **620** may identify final score **622,** number of issues **624,** number of fasteners **626,** and number of image sections **628.** Final score **622** may be an example of one implementation for final score **244 in** **FIG. 2****.**

Final score **622** identifies the percentage of image sections analyzed that met their respective corresponding conditions. Number of issues **624** identifies the number of issues that were detected. In other words, number of issues **624** may identify the number of image sections that did not meet their respective corresponding conditions. Number of fasteners **626** identifies the number of fasteners that were recognized by validator **212** using one or more image techniques. Number of image sections **628** may identify the total number of image sections that were used and analyzed to generate report **600.**

The illustrations in **FIG. 1** and **FIGS. 4****-6** are not meant to imply physical or architectural limitations to the manner in which an illustrative embodiment may be implemented. Other components in addition to or in place of the ones illustrated may be used. Some components may be optional. The different components shown in **FIG. 1** and **FIGS. 4****-6** may be illustrative examples of how components shown in block form in **FIGS. 2** and **3** can be implemented as physical structures. Additionally, some of the components in **FIG. 1** and **FIGS. 4****-6** may be combined with components in **FIGS. 2** and **3****,** used with components in **FIGS. 2** and **3****,** otherwise involved with components in **FIGS. 2** and **3****,** or a combination thereof.

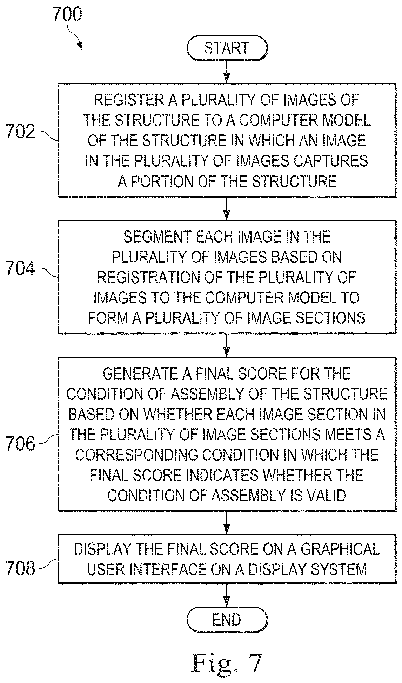

**FIG. 7** is an illustration of a method for performing an automated validation of a condition of assembly for a structure, depicted in accordance with an illustrative embodiment. The method **700** illustrated in **FIG. 7** may be used to perform, for example, automated validation process **202** as previously described in **FIG. 2****.** The method **700** is illustrated as a set of operations or processes. Not all of the illustrated operations may be performed in all embodiments of method **700.** Additionally, one or more processes that are not expressly illustrated in **FIG.** 7 may be included before, after, in between, or as part of the operations. In some embodiments, one or more of the operations may be optional and therefore omitted.

The method **700** may begin by registering a plurality of images of the structure to a computer model of the structure in which an image in the plurality of images captures a portion of the structure (operation **702**). In operation **702,** the structure may be, for example, a fuselage structure such as fuselage structure **400** in **FIG. 4****.** In other illustrative examples, the structure may be some other type of aircraft structure. Next, each image in the plurality of images may be segmented based on registration of the plurality of images to the computer model to form a plurality of image sections (operation **704**)**.** Operation **704** may be performed using, for example, without limitation, one or more image recognition and registration techniques.

Thereafter, a final score for the condition of assembly of the structure may be generated based on whether each image section in the plurality of image sections meets a corresponding condition in which the final score indicates whether the condition of assembly is valid (operation 706). In one illustrative example, the final score may be the percentage of the plurality of image sections that met their respective corresponding condition based on their registration to the computer model. The final score may then be displayed on a graphical user interface on a display system (operation **708**), with the process terminating thereafter. Each of the operations of the automated validation process described in the method **700** in **FIG. 7** may be performed autonomously.

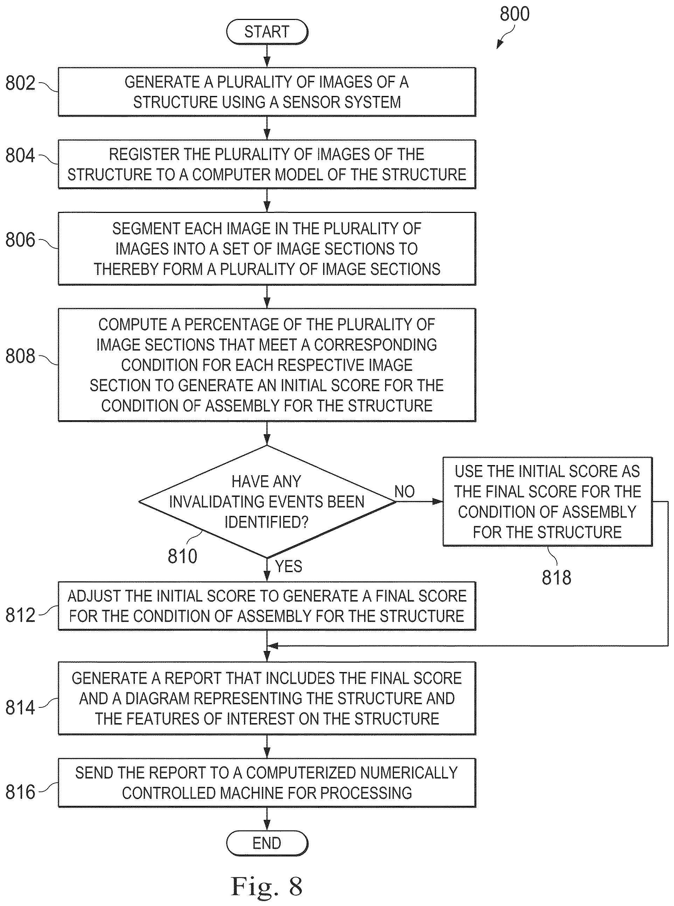

**FIG. 8** is an illustration of a method for performing an automated validation of a condition of assembly for a structure, depicted in accordance with an illustrative embodiment. The method **800** illustrated in **FIG. 8** may be used to perform, for example, automated validation process **202** as previously described in **FIG. 2****.** The method **800** is illustrated as a set of operations or processes. Not all of the illustrated operations may be performed in all embodiments of method **800.** Additionally, one or more processes that are not expressly illustrated in **FIG. 8** may be included before, after, in between, or as part of the operations. In some embodiments, one or more of the operations may be optional and therefore omitted.

The method **800** may begin by generating a plurality of images of a structure using a sensor system (operation **802**). In one illustrative example, the sensor system comprises a plurality of sensors positioned at a plurality of fixed positions relative to the structure. In other illustrative examples, the sensor system may be coupled to an automated guided vehicle. In these examples, the automated guided vehicle may be moved along a predetermined path relative to the structure to move the sensor system into a set of positions to generate the plurality of images. The set of positions may be an optimal set of positions that allow an entirety of an area or region of the structure that is of interest to be captured with the fewest number of images.

Next, the plurality of images of the structure may be registered to a computer model of the structure (operation **804**). In operation **804,** the computer model may be, for example, without limitation, a computer aided design model. Then, each image in the plurality of images is segmented into a set of image sections to thereby form a plurality of image sections (operation **806**). Operation **806** may be performed by, for example, without limitation, cropping, snipping, or otherwise extracting one or more image sections from each image. In some cases, the entirety of the image may be segmented. In other cases, only certain portions of the image may be segmented such that each image section created captures a portion of the structure that is expected to have a single feature of interest. The single feature of interest may be, for example, without limitation, a hole, a fastener installed in the hole, or some other type of feature that can be visually detected.

Thereafter, a percentage of the plurality of image sections that meet a corresponding condition for each respective image section is computed to generate an initial score for the condition of assembly for the structure (operation **808**). In operation **808,** a corresponding condition for a particular image section may be, for example, either a presence or absence of a particular feature of interest. In some illustrative examples, the corresponding condition may be selected from one of a presence of a hole, a presence of a fastener installed in a hole, an absence of a hole, an absence of a fastener in a hole, or some other type of condition.

A determination is made as to whether any invalidating events have been identified (operation **810**). In operation **810,** an invalidating event is a particular image section not meeting a corresponding condition that is critical to the condition of assembly for the structure. For example, in some cases, the presence of fastener in a particular location may be critical to the condition of assembly. If any invalidating events have been identified, the initial score is adjusted to generate a final score for the condition of assembly for the structure (operation **812**). In particular, in operation **812,** the initial score is adjusted based on the invalidating events identified. Operation **812** may be performed by, for example, adjusting the initial score to zero percent to indicate that the invalidating events have made the condition of assembly invalid. In other illustrative examples, an adjustment may be made to the initial score for each invalidating event, with the adjustment being weighted based on an importance of each invalidating event to the condition of assembly for the structure.

A report that includes the final score and a diagram representing the structure and the features of interest on the structure is then generated (operation **814**). The report is sent to a computerized numerically controlled machine for processing (operation **816**), with the process terminating thereafter. In some cases, the report is used to adjust the computerized numerically controlled machine or generate a command for the computerized numerically controlled machine.

With reference again to operation **810,** if no invalidating events have been identified, the initial score is used as the final score for the condition of assembly for the structure (operation **818**). The method **800** then proceeds to process **814** as described above.

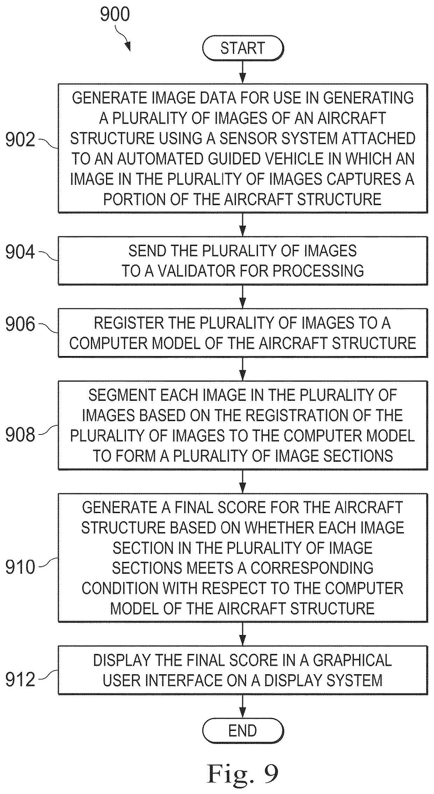

**FIG. 9** is an illustration of a method for performing an automated validation of a condition of assembly for an aircraft structure, depicted in accordance with an illustrative embodiment. The method **900** illustrated in **FIG. 9** may be used to perform, for example, automated validation process **202** as previously described in **FIG. 2****.** The method **900** is illustrated as a set of operations or processes. Not all of the illustrated operations may be performed in all embodiments of method **900.** Additionally, one or more processes that are not expressly illustrated in **FIG. 9** may be included before, after, in between, or as part of the operations. In some embodiments, one or more of the operations may be optional and therefore omitted.

The method **900** may begin by generating image data for use in generating a plurality of images of an aircraft structure using a sensor system attached to an automated guided vehicle in which an image in the plurality of images captures a portion of the aircraft structure (operation **902**). Next, the plurality of images are sent to a validator for processing (operation **904**). The validator may be implemented using a processor or computer system. The plurality of images may be registered to a computer model of the aircraft structure (operation **906**).

Thereafter, each image in the plurality of images may be segmented based on the registration of the plurality of images to the computer model to form a plurality of image sections (operation **908**). A final score is generated for the aircraft structure based on whether each image section in the plurality of image sections meets a corresponding condition with respect to the computer model of the aircraft structure (operation **910**). In operation **910,** the final score indicates whether the condition of assembly for the structure is valid. The final score is then displayed in a graphical user interface on a display system (operation **912**), with the process terminating thereafter.

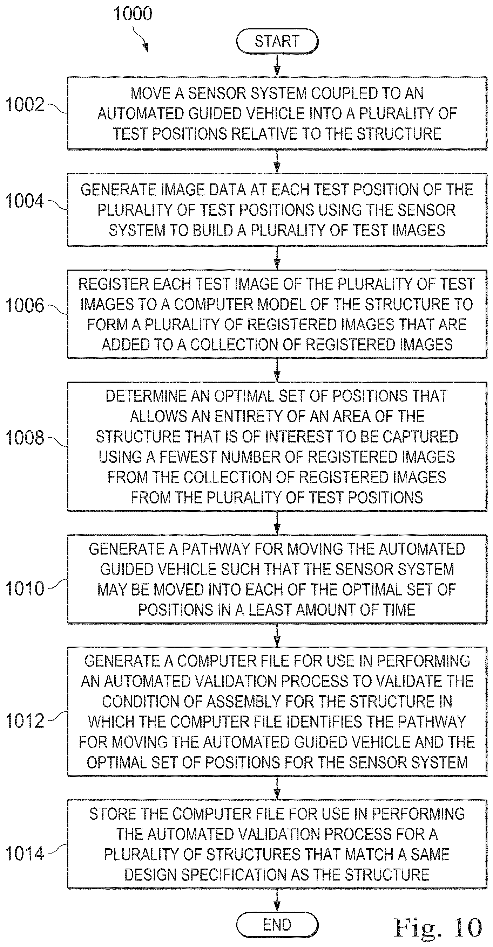

**FIG. 10** is an illustration of a method for establishing a pathway for performing an automated validation process, depicted in accordance with an illustrative embodiment. The method **1000** illustrated in **FIG. 10** may be used to establish a pathway, such as pathway **304** in **FIG. 3****,** for performing automated validation process **202** as previously described in **FIG. 2****.** The method **1000** is illustrated as a set of operations or processes. Not all of the illustrated operations may be performed in all embodiments of method **1000.** Additionally, one or more processes that are not expressly illustrated in **FIG. 10** may be included before, after, in between, or as part of the operations. In some embodiments, one or more of the operations may be optional and therefore omitted.

The method **1000** may begin by moving a sensor system coupled to an automated guided vehicle into a plurality of test positions relative to the structure (operation **1002**)**.** Operation **1002** may be performed by, for example, moving the automated guided vehicle along a predetermined test pathway to allow the sensor system to be moved into the plurality of test positions. Next, image data is generated at each test position of the plurality of test positions using the sensor system to build a plurality of test images (operation **1004**). Each test image of the plurality of test images is registered to a computer model of the structure to form a plurality of registered images that are added to a collection of registered images (operation **1006**).

Operation **1006** may be performed by, for example, without limitation, drawing correspondences between features of the structure that are detected in a test image and those same features in the computer model. This process may include using, for example, various algorithms and methodologies, including, but not limited to, RANSAC (the Random Sample Consensus algorithm) and ICP (the iterative closest point algorithm).

Thereafter, an optimal set of positions that allows an entirety of an area of the structure that is of interest to be captured using a fewest number of registered images from the collection of registered images is determined from the plurality of test positions (operation **1008**). Next, a pathway is generated for moving the automated guided vehicle such that the sensor system may be moved into each of the optimal set of positions in a least amount of time (operation **1010**). A computer file is generated for use in performing an automated validation process to validate the condition of assembly for the structure in which the computer file identifies the pathway for moving the automated guided vehicle and the optimal set of positions for the sensor system (operation **1012**).

The computer file is then stored for use in performing the automated validation process for a plurality of structures that match a same design specification as the structure (operation **1014),** with the process terminating thereafter. For example, the pathway and optimal set of positions identified in the computer file may be used to move the automated guided vehicle and sensor system, respectively, relative to other structures that are being assembled according to the same computer model as the structure for the purposes of performing the automated validation process. In some illustrative examples, the computer file may also be stored for use in performing the automated validation process for different assembly or stages of assembly or manufacturing for the structure.

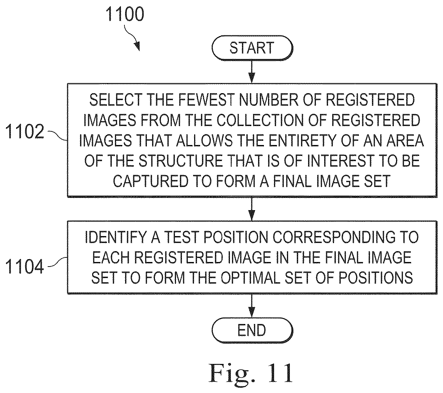

**FIG. 11** is an illustration of a method for determining an optimal set of positions for performing an automated validation process, depicted in accordance with an illustrative embodiment. The method **1100** illustrated in **FIG. 11** may be an example of one process that may be used to implement operation **1008 in** **FIG. 10****.** The method **1100** is illustrated as a set of operations or processes. Not all of the illustrated operations may be performed in all embodiments of method **1100.** Additionally, one or more processes that are not expressly illustrated in **FIG. 11** may be included before, after, in between, or as part of the operations. In some embodiments, one or more of the operations may be optional and therefore omitted.

The method **1100** may begin by selecting the fewest number of registered images from the collection of registered images that allows the entirety of an area of the structure that is of interest to be captured to form a final image set (operation **1102**). Next, a test position corresponding to each registered image in the final image set is identified to form the optimal set of positions (operation **1104),** with the process terminating thereafter.

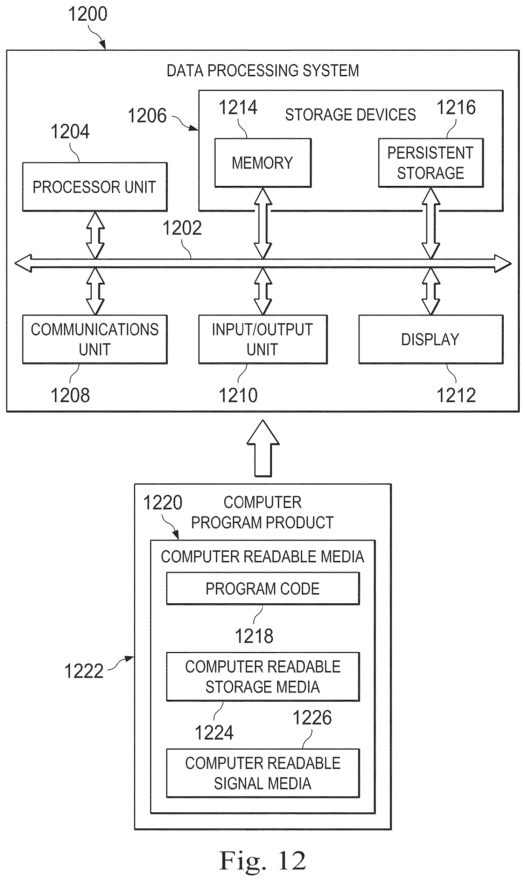

**FIG. 12** is a block diagram of a data processing system, depicted in accordance with an illustrative embodiment. Data processing system **1200** may be used to implement validator **212** in **FIG. 1** and pathway generator **300 in** **FIG. 3****.** As depicted, data processing system **1200** includes communications framework **1202,** which provides communications between processor unit **1204,** storage devices **1206,** communications unit **1208,** input/output unit **1210,** and display **1212.** In some cases, communications framework **1202** may be implemented as a bus system.

Processor unit **1204** is configured to execute instructions for software to perform a number of operations. Processor unit **1204** may comprise a number of processors, a multiprocessor core, and/or some other type of processor, depending on the implementation. In some cases, processor unit **1204** may take the form of a hardware unit, such as a circuit system, an application specific integrated circuit (ASIC), a programmable logic device, or some other suitable type of hardware unit.

Instructions for the operating system, applications, and/or programs run by processor unit **1204** may be located in storage devices **1206.** Storage devices **1206** may be in communication with processor unit **1204** through communications framework **1202.** As used herein, a storage device, also referred to as a computer readable storage device, is any piece of hardware capable of storing information on a temporary and/or permanent basis. This information may include, but is not limited to, data, program code, and/or other information.

Memory **1214** and persistent storage **1216** are examples of storage devices **1206.** Memory **1214** may take the form of, for example, a random access memory or some type of volatile or non-volatile storage device. Persistent storage **1216** may comprise any number of components or devices. For example, persistent storage **1216** may comprise a hard drive, a flash memory, a rewritable optical disk, a rewritable magnetic tape, or some combination of the above. The media used by persistent storage **1216** may or may not be removable.

Communications unit **1208** allows data processing system **1200** to communicate with other data processing systems and/or devices. Communications unit **1208** may provide communications using physical and/or wireless communications links.

Input/output unit **1210** allows input to be received from and output to be sent to other devices connected to data processing system **1200.** For example, input/output unit **1210** may allow user input to be received through a keyboard, a mouse, and/or some other type of input device. As another example, input/output unit **1210** may allow output to be sent to a printer connected to data processing system **1200.**

Display **1212** is configured to display information to a user. Display **1212** may comprise, for example, without limitation, a monitor, a touch screen, a laser display, a holographic display, a virtual display device, and/or some other type of display device.

In this illustrative example, the processes of the different illustrative embodiments may be performed by processor unit **1204** using computer-implemented instructions. These instructions may be referred to as program code, computer usable program code, or computer readable program code and may be read and executed by one or more processors in processor unit **1204.**

In these examples, program code **1218** is located in a functional form on computer readable media **1220,** which is selectively removable, and may be loaded onto or transferred to data processing system **1200** for execution by processor unit **1204.** Program code **1218** and computer readable media **1220** together form computer program product **1222.** In this illustrative example, computer readable media **1220** may be computer readable storage media **1224** or computer readable signal media **1226.**

Computer readable storage media **1224** is a physical or tangible storage device used to store program code **1218** rather than a medium that propagates or transmits program code **1218.** Computer readable storage media **1224** may be, for example, without limitation, an optical or magnetic disk or a persistent storage device that is connected to data processing system **1200.**

Alternatively, program code **1218** may be transferred to data processing system **1200** using computer readable signal media **1226.** Computer readable signal media **1226** may be, for example, a propagated data signal containing program code **1218.** This data signal may be an electromagnetic signal, an optical signal, and/or some other type of signal that can be transmitted over physical and/or wireless communications links.

The illustration of data processing system **1200** in **FIG. 12** is not meant to provide architectural limitations to the manner in which the illustrative embodiments may be implemented. The different illustrative embodiments may be implemented in a data processing system that includes components in addition to or in place of those illustrated for data processing system **1200.** Further, components shown in **FIG. 12** may be varied from the illustrative examples shown.

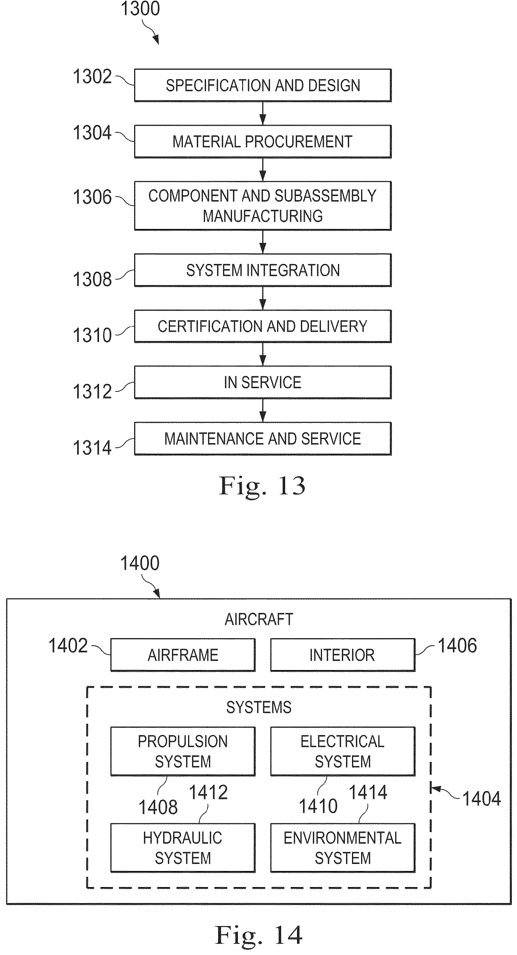

Illustrative embodiments of the disclosure may be described in the context of aircraft manufacturing and service method **1300** as shown in **FIG. 13** and aircraft **1400** as shown in **FIG. 14. FIG. 13** is an illustration of an aircraft manufacturing and service method, depicted in accordance with an illustrative embodiment. Aircraft manufacturing and service method **1300** may be used to manufacture, for example, aircraft **100** in **FIG. 1****.** During pre-production, aircraft manufacturing and service method **1300** may include specification and design **1302** of aircraft **1400** in **FIG. 14** and material procurement **1304.**

During production, component and subassembly manufacturing **1306** and system integration **1308** of aircraft **1400** in **FIG. 14** takes place. Thereafter, aircraft **1400** in **FIG. 14** may go through certification and delivery **1310** in order to be placed in service **1312.** While in service **1312** by a customer, aircraft **1400** in **FIG. 14** is scheduled for routine maintenance and service **1314,** which may include modification, reconfiguration, refurbishment, and other maintenance or service.

Each of the processes of aircraft manufacturing and service method **1300** may be performed or carried out by a system integrator, a third party, and/or an operator. In these examples, the operator may be a customer. For the purposes of this description, a system integrator may include, without limitation, any number of aircraft manufacturers and major-system subcontractors; a third party may include, without limitation, any number of vendors, subcontractors, and suppliers; and an operator may be an airline, a leasing company, a military entity, a service organization, and so on.

**FIG. 14** is a block diagram of an aircraft, depicted in accordance with an illustrative embodiment. In this example, aircraft **1400** is produced by aircraft manufacturing and service method **1300** in **FIG. 13** and may include airframe **1402** with plurality of systems **1404** and interior **1406.** Examples of systems **1404** include one or more of propulsion system **1408,** electrical system **1410,** hydraulic system **1412,** and environmental system **1414.** Any number of other systems may be included. Although an aerospace example is shown, different illustrative embodiments may be applied to other industries, such as the automotive industry.

Apparatuses and methods embodied herein may be employed during at least one of the stages of aircraft manufacturing and service method **1300** in **FIG. 13****.** In particular, automated validation process **202** from **FIG. 2** may be performed during any one of the stages of aircraft manufacturing and service method **1300.** For example, without limitation, validation system **208** in **FIG. 2** may be used to perform automated validation process **202** to validate a condition of assembly for a structure of aircraft **1400** during at least one of component and subassembly manufacturing **1306,** system integration **1308,** routine maintenance and service **1314,** or some other stage of aircraft manufacturing and service method **1300.** Still further, pathway generator **300** from **FIG. 3** may be used to establish a pathway for performing automated validation process **202** during any one of the stages of aircraft manufacturing and service method **1300.**

In one illustrative example, components or subassemblies produced in component and subassembly manufacturing **1306** in **FIG. 13** may be fabricated or manufactured in a manner similar to components or subassemblies produced while aircraft **1400** is in service **1312** in **FIG. 13****.** As yet another example, one or more apparatus embodiments, method embodiments, or a combination thereof may be utilized during production stages, such as component and subassembly manufacturing **1306** and system integration **1308** in **FIG. 13****.** One or more apparatus embodiments, method embodiments, or a combination thereof may be utilized while aircraft **1400** is in service **1312** and/or during maintenance and service **1314** in **FIG. 13****.** The use of a number of the different illustrative embodiments may substantially expedite the assembly of and/or reduce the cost of aircraft **1400.**

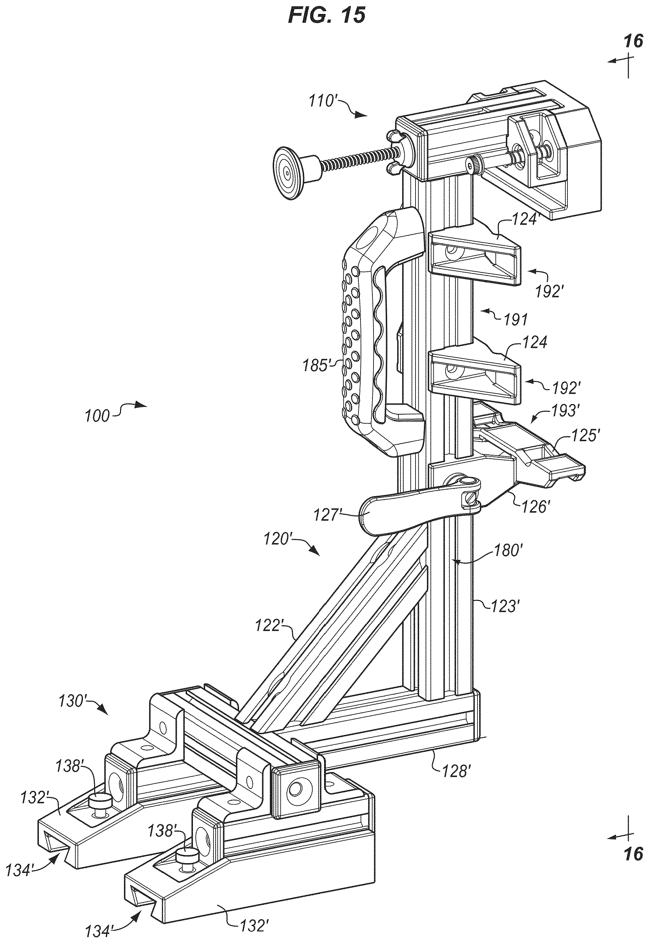

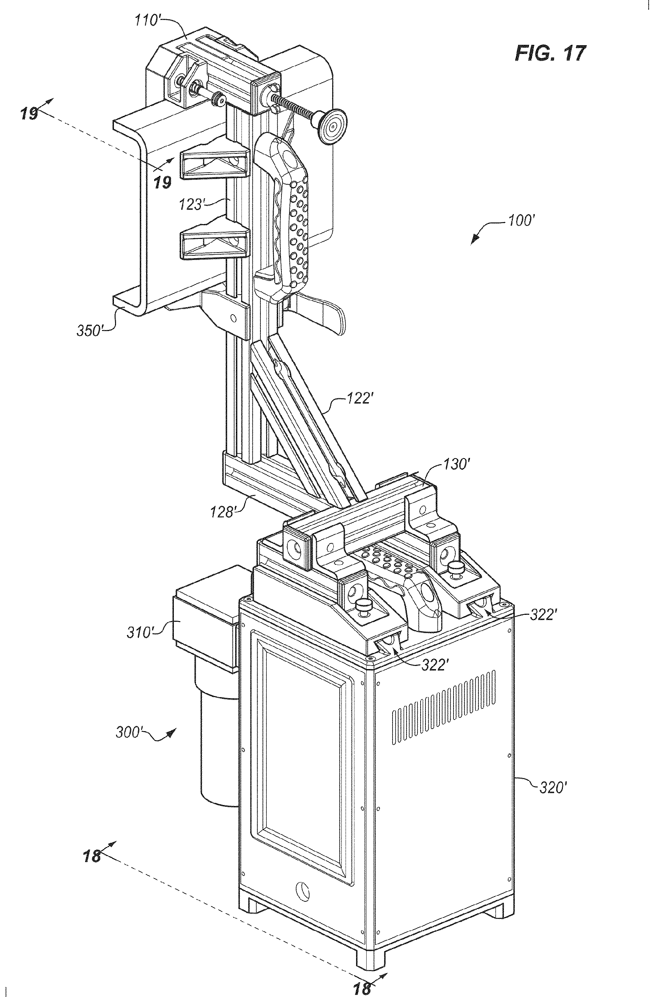

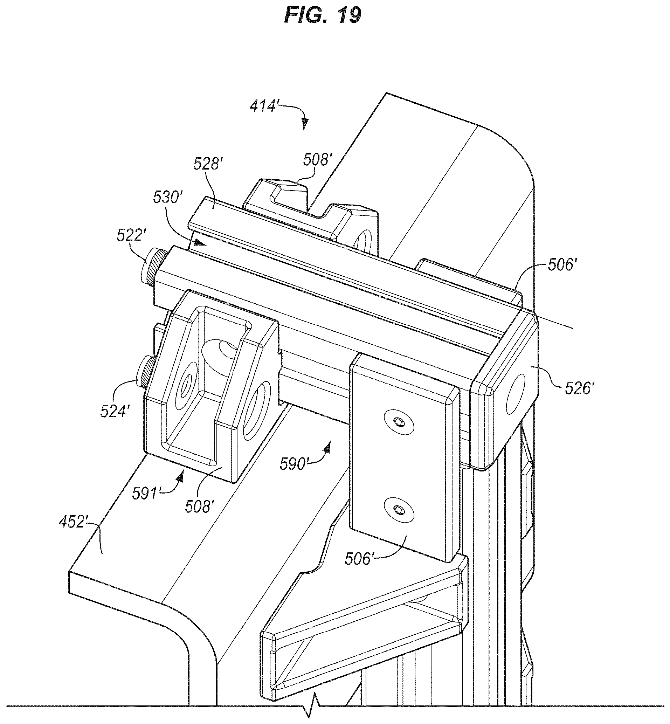

FIGS 15-20 illustrate a hanging support 100 that hangs from a floor beam of an aircraft and bears an inspection system. Specifically, FIGS. 15-16 illustrate views of hanging support 100', FIGS. 17-18 illustrate views of hanging support 100' bearing a mounted inspection system 300' as a load, and FIGS. 19-20 illustrate components of adjustable clamp 110' of hanging support 100'.

Turning to FIG. 15, FIG. 15 is a perspective view of hanging support 100' in an illustrative embodiment. In this embodiment, hanging support 100' includes adjustable clamp 110', which attaches to a floor beam or other portion of an airframe of an aircraft. Hanging support 100' further includes frame 120', and mount 130'. Frame 120' protrudes vertically downward from the adjustable clamp 110', forming a right angle with adjustable clamp 110'. Mount 130' protrudes vertically downward from frame 120' and applies torque to frame 120' when bearing a load such as an inspection system (e.g., inspection system 300' of FIG. 17).

Adjustable clamp 110' is designed to facilitate one-handed installation of hanging support 100' via handle 185', in order to enhance the safety of one or more technicians who may be placing hanging support 100' at various locations within an aircraft. Further details of adjustable clamp 110' are provided with respect to FIGS. 19-20.

Frame 120' includes multiple rigid members 122', 123', and 128' which are fixedly attached to each other. Rigid member 123' is vertically oriented, and is attached to adjustable clamp 110'. Frame 120' further includes feet 124', which may contact a floor beam (e.g., floor beam 350' of FIG. 17) to which adjustable clamp 110' is attached. Feet 124' define rightward surfaces 192', which are parallel with rightward surface 191' of rigid member 123'. In this embodiment, frame 120' further includes adjustable platform 125', which may be adjustably repositioned along rigid member 123' by loosening handles 127' and sliding support 126' upward or downward along slot 180'. In this manner, handles 127' lock the adjustable platform 125' into place at frame 120'. Adjustable platform 125' defines a horizontal surface 193'.

Mount 130' is fixedly attached to frame 120', protrudes vertically downward, from frame 120', and includes feet 132' which define grooves 134' for receiving a load such as an inspection system that will hang from mount 130' and hence apply downward force to frame 120'. Spring-loaded pull-out pins 138' snap into place on the load after the load has been inserted a desired distance into mount 130'.

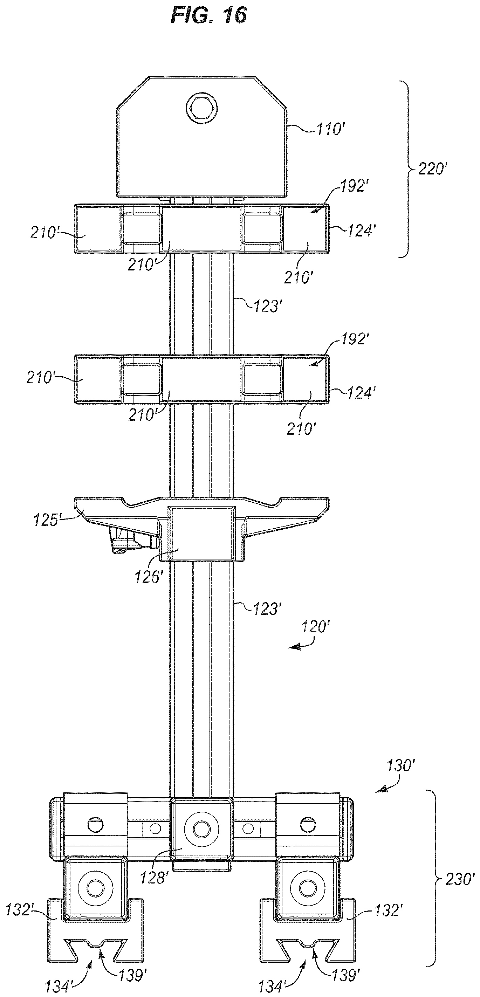

Further details of the features of hanging support 100' will be discussed with regard to FIG. 16. FIG. 16 is a front view of hanging support 100' indicated by view arrows 16 of FIG. 15. FIG. 16 shows that adjustable clamp 110' is affixed to upper portion 220' of frame 120', while mount 130' is affixed to lower portion 230' of frame 120'. FIG. 16 also illustrates that feet 124' include rubberized pads 210', which may help to prevent swaying or other movement of hanging support 100' after hanging support 100' has been placed. Rubberized pads 210' may further prevent surface scratches at the floor beam. In further embodiments, all contact surfaces between the adjustable clamp 110' and the floor beam are rubberized. In FIG. 16, stop 139' has been illustrated as well. Stop 139' corresponds with a matching indent on a corresponding load attached to mount 130'. Stop 139' prevents an inserted load from being over inserted or otherwise pushed out the other end of mount 130'. With an introductory discussion provided regarding the components of hanging support 100', further description focuses upon hanging support 100' as utilized when bearing a load.

FIG. 17 is a perspective view of a hanging support in an illustrative embodiment. According to FIG. 17, hanging support 100' has been clamped onto floor beam 350', of which only a partial segment is shown. Hanging support 100' bears a mounted inspection system 300', which acquires images or other data utilized for inspecting an interior of an aircraft. For example, inspection system 300' may compare known locations of fasteners in the aircraft to expected locations of fasteners in the aircraft, in order to ensure that fasteners are placed within tolerance limits.

In this embodiment, inspection system 300' includes imaging system 310', and housing 320'. Housing 320' may include a computer or other components for operating imaging system 310', and/or analyzing data provided by imaging system 310'. Housing 320' includes projections 322' which correspond with grooves 134' of mount 130', allowing for slidable insertion of inspection system 300' into mount 130'.

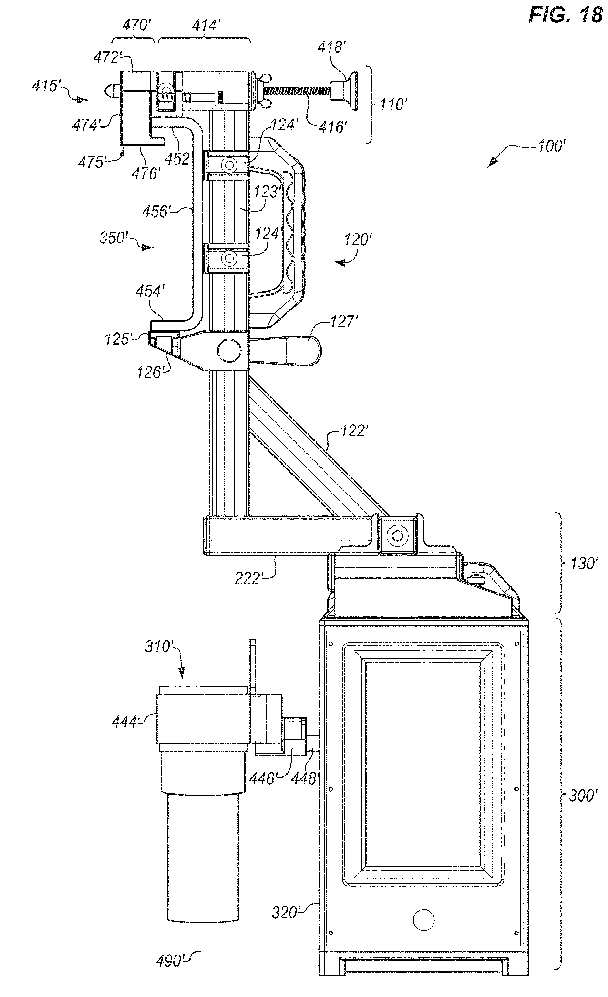

FIG. 4 is a side view of hanging support 100' bearing a load in an illustrative embodiment, and is indicated by view arrows 19 of FIG. 17. FIG. 18 illustrates that imaging system 310' includes camera 444', which is rotated by actuator 446' about shaft 448'. This configuration allows camera 444' to image a full three hundred and sixty degree view of the interior (e.g., top-to-bottom) of the aircraft.

In this embodiment, centerline 490' of camera 444' is aligned with wall 456' of floor beam 350'. Wall 456' is typically referred to as a "web." In further embodiments with floor beams having an "I", "J", "T", and/or "Z" cross section, centerline 490' may be aligned with any suitable Outer Mold Line (OML) of the floor beam. Upper lip 452' and lower lip 454' (i.e., an additional lip) of floor beam 350' are also illustrated. Adjustable platform 125' is pressed against lower lip 454', while adjustable clamp 110' is hooked around upper lip 452' and clamped to floor beam 350'.

Adjustable clamp 110' also includes a handle 418', a rod 416', a first assembly 414', and a second assembly 470'. Rod 416' extends horizontally through first assembly 414' and second assembly 470'. Second assembly 470' includes a rigid part 415'. Rigid part 415' includes an upper horizontal portion 472' that contacts first assembly 414' when adjustable clamp 110' is closed. Rigid part 415' also includes a vertical portion 474' that protrudes downwards from upper horizontal portion 472', and a lower horizontal portion 476' that protrudes horizontally (e.g., to the right) from a lower end 475' of vertical portion 474' towards first assembly 414'. Rigid member 123' forms a right angle with adjustable clamp 110', and continues vertically below vertical portion 474' of rigid part 415'. Further details of adjustable clamp 110' are provided with respect to FIGS. 19-20, which correspond with view arrows 20 of FIG. 3.

FIG. 19 is a perspective view of first assembly 414' of an adjustable clamp in an illustrative embodiment. In this embodiment, first assembly 414' is placed atop upper lip 452'. Upper lip 452' may also be referred to as a flange of a C channel. First assembly 414' includes horizontal part 528', which is attached to rigid members 506' and plate 526'. Slot 530' of horizontal part 528' is used to facilitate of sliding of second assembly 470' with respect to first assembly 414'. Horizontal part 528' defines planar lower surface 590' that sits atop and contacts the upper lip 452'. Planar lower surface 590' is parallel with and faces the horizontal surface 193' of adjustable platform 125'.

First assembly 414' further includes feet 508', which protrude from the horizontal part 528' perpendicular to an axial direction of horizontal part 528'. Feet 508' have lower surfaces 591' that are coplanar with the planar lower surface 590' of the horizontal part 528'. Nut 524' is secured within rigid part 415' of second assembly 470'.

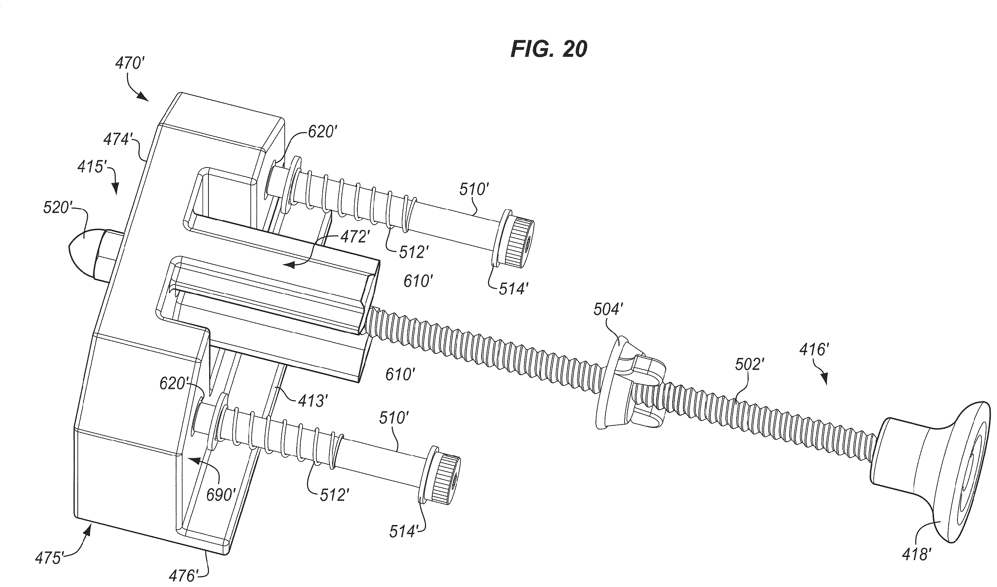

FIG. 20 is a perspective view of a second assembly 470' of adjustable clamp 110' in an illustrative embodiment. FIG. 20 illustrates bolts 510' that slide within feet 508'. A spring 512' is wrapped around each bolt 510', and is bordered by nut 524' on one end, and lip 514' on the other end. If bolts 510' slide too far to the left (e.g., because second assembly 470' has slid too far to the left), springs 512' apply force that slides bolts 510' back to the right. Also provided for context is handle 418', and rod 416' (which includes threading 502'), and adjustable stop 504' (e.g., a wing nut). Nut 522' and cap 520' are fasteners that fasten rod 416' to second assembly 470'.

According to FIG. 20, rigid part 415' is secured to rod 416' via cap 520' and nut 522' (which is hidden from view, but visible in FIG. 5). Receptacles 620' at rigid part 415' receive bolts 510', and secure the nuts 524' in place. This arrangement affixes the bolts 510' to second assembly 470'. Thus, second assembly 470' is spring-loaded by springs 512'. FIG. 20 further illustrates projections 610', which protrude from rigid part 415' into slot 530' of horizontal part 528', and slide within slot 530' as adjustable clamp 110' extends and retracts. Also illustrated is leftward surface 690' defined by vertical portion 474'. Leftward surface 690' is parallel with and faces the rightward surface 191' defined by rigid member 123'.

With an illustration provided of both first assembly 414' and second assembly 470', it will be understood that a technician may align adjustable clamp 110' with floor beam 350', then push on handle 185' of FIG. 15 to extend adjustable clamp 110'. This action pushes second assembly 470' away from first assembly 414'. The technician may then "hook" the lower horizontal portion 476' about upper lip 452', and release the handle 185', causing adjustable clamp 110' to retract and grip the floor beam 350'. The technician may further adjust the location of adjustable stop 504' in order to prevent adjustable clamp 110' from extending, and slide platform 150' into contact with lower lip 454'. In this manner, hanging support 100' becomes secured to floor beam 350'.

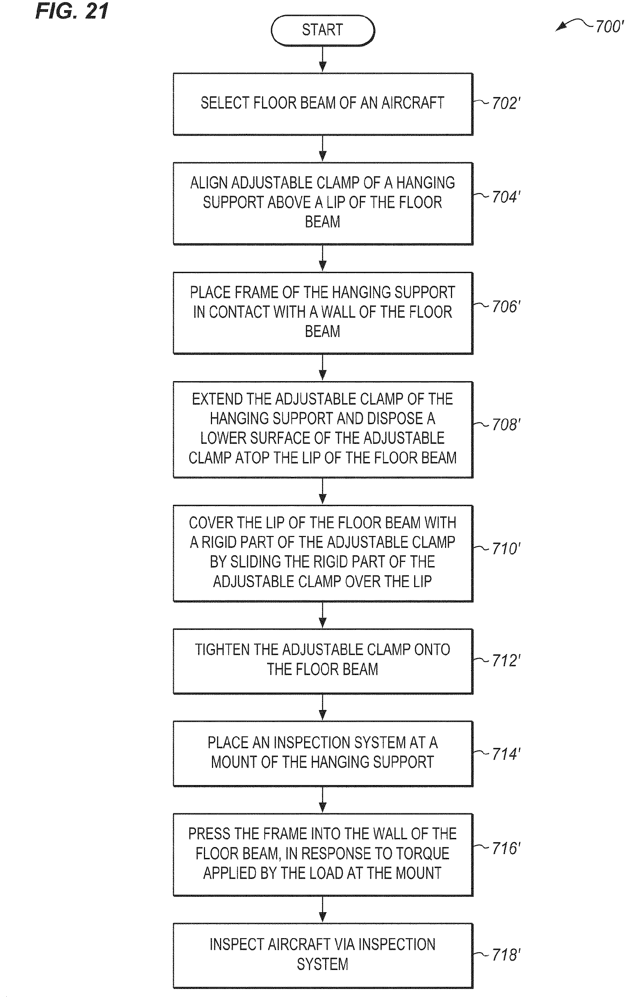

Illustrative details of the operation of hanging support 100' will be discussed with regard to FIG. 21. Assume, for this embodiment, that a technician wishes to place inspection system 300' in position for inspecting an aircraft, but that no support has been placed for holding inspection system 300' in position.

FIG. 21 is a flowchart illustrating a method 700' for installing a hanging support in an illustrative embodiment. The steps of method 700' are described with reference to hanging support 100' of FIG. 15, but those skilled in the art will appreciate that method 700' may be performed in other systems.

A floor beam of the aircraft is selected (step 702'). The floor beam may be selected based on a predefined plan, or may be dynamically determined. Hanging support 100 is then attached to lip 452' of the floor beam as described in steps 704'-712' below. Adjustable clamp 110' of hanging support 100' is aligned with upper lip 452' of floor beam 350' (step 704'). This alignment, may, for example, involve vertically positioning rigid part 415' over upper lip 452'. Frame 120' of hanging support 100' is placed in contact with wall 456' of floor beam 350', for example by placing feet 124' of frame 120' against wall 456' (step 706').

With hanging support 100' in position, handle 185' is pushed, extending adjustable clamp 110' of hanging support 100' (step 708'). This includes disposing a lower surface of adjustable clamp 110' atop upper lip 452' of floor beam 350'. While adjustable clamp 110' is extended, second assembly 470' is pushed away from first assembly 414'. This opens adjustable clamp 110' wide enough to cover upper lip 452' of floor beam 350' with rigid part 415' of adjustable clamp 110' (step 710'). This may be performed by sliding rigid part 415' over upper lip 452'. For example, lower horizontal portion 476' may be hooked around upper lip 452', securing hanging support 100' in place. Adjustable clamp 110' is then tightened onto floor beam 350' (step 712'). For example, handle 185' may be released in order to retract second assembly 470', and/or adjustable stop 504' may be threaded into place to prevent adjustable clamp 110' from extending again. A load (e.g., inspection system 300') is placed at mount 130' of hanging support 10'0 (step 714'). Mount 130' protrudes from rigid member 123' of frame 120' in a horizontal direction. This design feature causes a load (e.g., inspection system 300') at mount 130' to apply torque that presses frame 120' into wall 456' of floor beam 350' (step 716'). The aircraft is then inspected via inspection system 300' (step 718').

Method 700' provides a number of advantages over prior placement and installation techniques for inspection systems. First, the unique geometry of adjustable clamp 110' allows for a technician to perform a one-handed installation of hanging support 100'. This ensures that if a technician is using a ladder during installation of hanging support 100', the technician still has a hand free in order to provide personal balance and stability.

Second, hanging support 100' itself has a unique geometry which causes application of a load at mount 130' to enhance the stability of hanging support 100', by providing torque that presses frame 120' firmly into floor beam 350'.

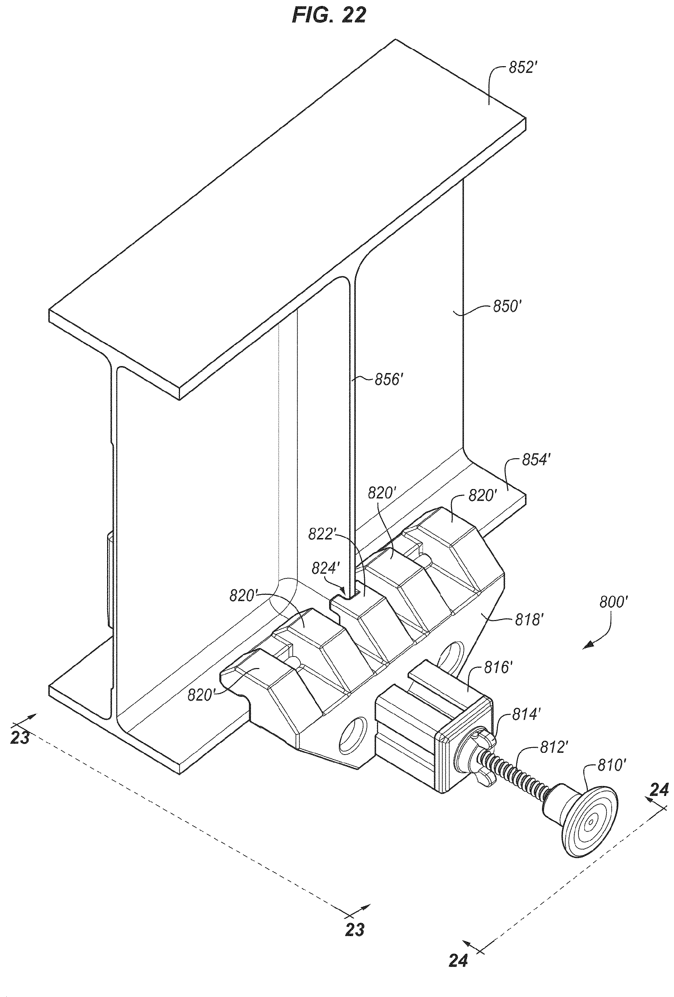

FIGS. 22-24 illustrate a further illustrative embodiment of an adjustable clamp 800' which may be utilized by hanging support 100'. Specifically, FIGS. 22-24 illustrate an adjustable clamp 800' that may be clamped to a lower lip of a floor beam 850' having an "I" shaped cross-section instead of a "C" shaped cross-section.

FIG, 22 is a perspective view of adjustable clamp 800'. According to FIG. 22, adjustable clamp 800' includes handle 810', and rod 812' (which is threaded), along with adjustable stop 814'. Rod 812' continues through rigid part 816', and through rigid part 818'. In this embodiment, rigid part 818' includes multiple prongs 820', as well as a central prong 822' which includes a cut-out 824'. Adjustable clamp 800' is presently clamped to floor beam 850', which includes upper lip 852', lower lip 854', and rib 856'.

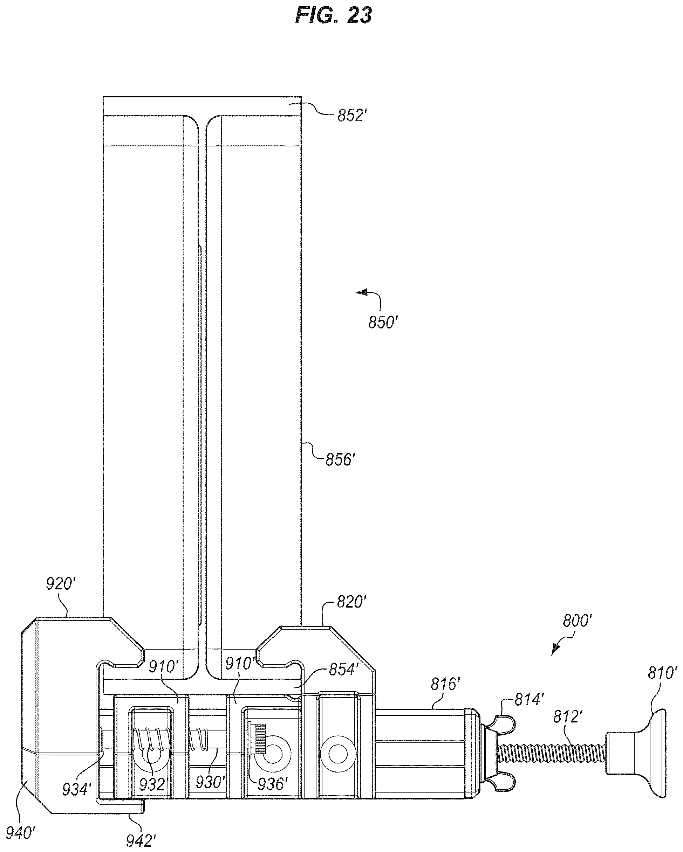

FIG. 23 is a side of view the adjustable clamp 800', and corresponds with view arrows 23 of FIG. 8. According to FIG. 23, adjustable clamp 800' further includes feet 910', via which bolt 930' slides. Bolt 930' includes lip 936', which acts as a stop for spring 932'. Feet 910' are fixedly attached to rigid part 816'. However, rigid part 940' is only connected to bolt 930' (via receptacle 934'), as well as rod 812' (via a fastener, not shown). Thus, rigid part 940' may be extended away from rigid part 818' by pressing handle 810'. In this embodiment, rigid part 940' includes prongs 920' (e.g., upper horizontal portions), as well as lower horizontal portion 942'. Lower horizontal portion 942' protrudes towards rigid part 818'.

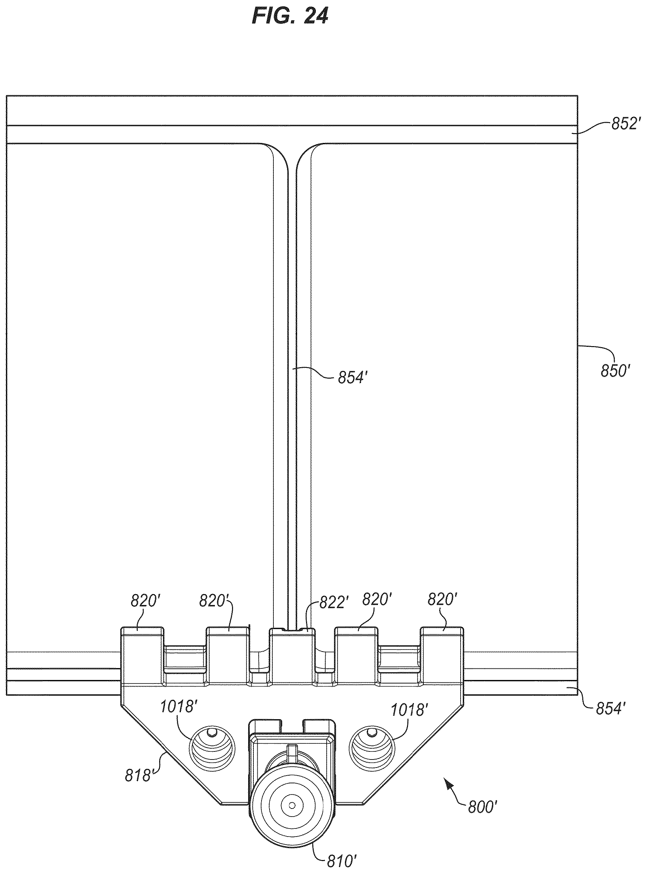

FIG. 24 is a front view of adjustable clamp 800, and corresponds with view arrows 24 of FIG. 22. This view illustrates that rigid part 818 includes holes via which bolts 930 may travel.

### Examples

In the following examples, additional processes, systems, and methods are described in the context of an adjustable hanging support.

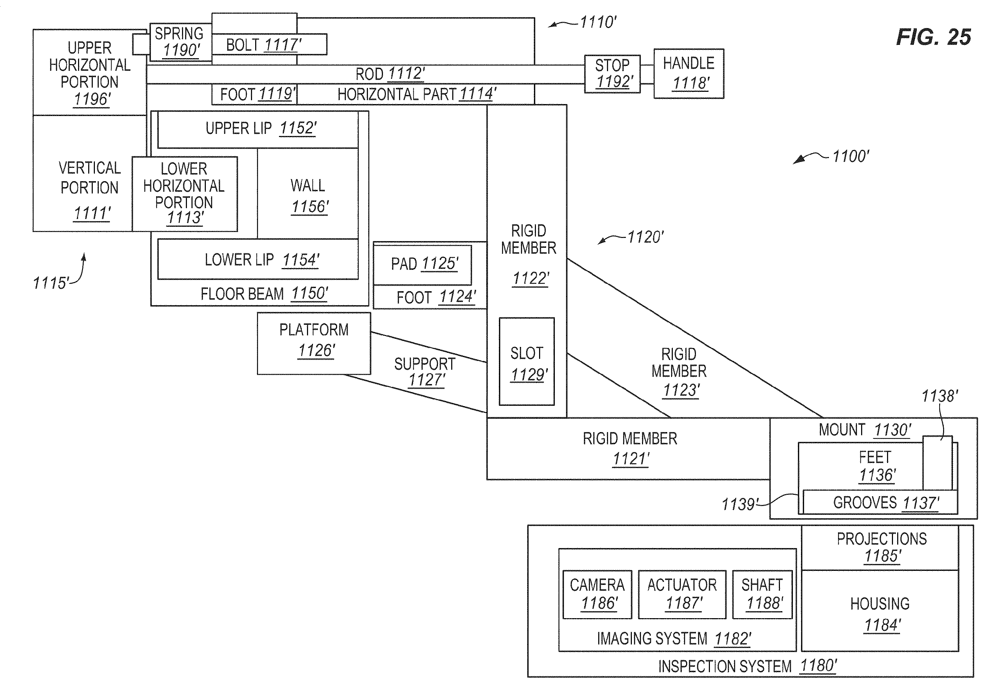

FIG. 25 is a block diagram of a hanging support 1100' holding an inspection system in an illustrative embodiment. According to FIG. 25, hanging support 1100' includes clamp 1110', frame 1120', and mount 1130'. Clamp 1110' includes horizontal part 1114', which contacts wall 1156' of floor beam 1150'. Foot 1119' is attached to horizontal part 1114', and contacts the upper lip 1152' of floor beam 1150'. A position of rod 1112' is controlled by handle 1118' and stop 1192', which enables rigid part 1115' to be displaced with respect to the rest of clamp 1110'. Bolt 1117' is coupled to upper horizontal portion 1196' of rigid part 1115', and spring 1190' returns the rigid part 1115' to a default position when no force is applied. Lower horizontal portion 1113' projects outward from vertical portion body 1111' toward frame 1120', and is wrapped around upper lip 1152'.

Frame 1120' includes rigid member 1121', rigid member 1122', and rigid member 1123'. Foot 1124' extends from rigid member 1122', and pad 1125' of foot 1124' contacts wall 1156' of floor beam 1150'. Support 1127' adjustably slides at slot 1129', and holds platform 1126' in place. Platform 1126' contacts lower lip 1154' of floor beam 1150', further strengthening the grip of hanging support 1100' at floor beam 1150'.

Mount 1130' includes feet 1136', which define grooves 1137'. Spring-loaded pull-out pins are also provided at mount 1130' to hold inspection system 1180' in position. Furthermore, a stop 1139' is provided at mount 1130 to prevent over-insertion of inspection system 1180'.

In this embodiment, inspection system 1180' includes projections 1185', which extend from housing 1184' and mate with grooves 1137'. Inspection system 1180' further includes inspection system 1182', which inspects the interior of an aircraft. In this embodiment, inspection system 1182' includes camera 1186', and actuator 1187' which rotates camera 1186' about shaft 1188'.

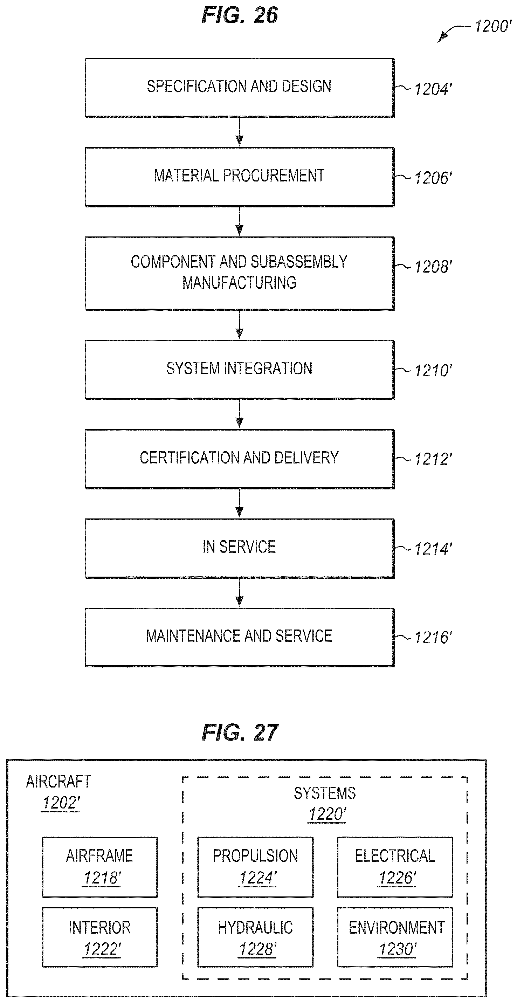

Referring more particularly to the drawings, embodiments of the disclosure may be described in the context of an aircraft manufacturing and service method 1200' as shown in FIG. 26 and an aircraft 1202' as shown in FIG. 27. During pre-production, illustrative method 1200' may include specification and design 1204' of the aircraft 1202' and material procurement 1206'. During production, component and subassembly manufacturing 1208' and system integration 1210' of the aircraft 1202' takes place. Thereafter, the aircraft 1202' may go through certification and delivery 1212' in order to be placed in service 1214'. While in service by a customer, the aircraft 1202' is scheduled for routine maintenance and service 1216' (which may also include modification, reconfiguration, refurbishment, and so on). Apparatus and methods embodied herein may be employed during any one or more suitable stages of the production and service method 1200' (e.g., specification and design 1204', material procurement 1206', component and subassembly manufacturing 1208', system integration 1210', certification and delivery 1212', service 1214', maintenance and service 1216') and/or any suitable component of aircraft 1202' (e.g., airframe 1218', systems 1220', interior 1222', propulsion 1224', electrical 1226', hydraulic 1228', environmental 1230').

Each of the processes of method 1200' may be performed or carried out by a system integrator, a third party, and/or an operator (e.g., a customer). For the purposes of this description, a system integrator may include without limitation any number of aircraft manufacturers and major-system subcontractors; a third party may include without limitation any number of vendors, subcontractors, and suppliers; and an operator may be an airline, leasing company, military entity, service organization, and so on.

As shown in FIG. 27, the aircraft 1202' produced by illustrative method 1200' may include an airframe 1218' with a plurality of systems 1220' and an interior 1222'. Examples of high-level systems 1220' include one or more of a propulsion system 1224', an electrical system 1226', a hydraulic system 1228', and an environmental system 1230'. Any number of other systems may be included. Although an aerospace example is shown, the principles of the invention may be applied to other industries, such as the automotive industry.

As already mentioned above, apparatus and methods embodied herein may be employed during any one or more of the stages of the production and service method 1200. For example, components or subassemblies corresponding to production stage 1208 may be fabricated or manufactured in a manner similar to components or subassemblies produced while the aircraft 1202' is in service. Also, one or more apparatus embodiments, method embodiments, or a combination thereof may be utilized during the production stages 1208' and 1210', for example, by substantially expediting assembly of or reducing the cost of an aircraft 1202'. Similarly, one or more of apparatus embodiments, method embodiments, or a combination thereof may be utilized while the aircraft 1202' is in service, for example and without limitation, to maintenance and service 1216'. For example, the techniques and systems described herein may be used for steps 1206', 1208', 1210', 1214', and/or 1216', and/or may be used for airframe 1218' and/or interior 1222'. These techniques and systems may even be utilized for systems 1220', including for example propulsion 1224', electrical 1226', hydraulic 1228', and/or environmental 1230'.

In one embodiment, an inspection system 300' is held by hanging support 100' and is utilized to analyze airframe 1218' before or after component and subassembly manufacturing 1208', or system integration 1210'. Hanging support 100' may support inspection system 300' during this process. The airframe 1218' may then be utilized in service 1214'. Then, in maintenance and service 1216', hanging support 100' may again be used to hold an inspection system 300' in place. Inventive components and methods may be utilized throughout component and subassembly manufacturing 1208' in order to inspect various structural components of aircraft 1202'.

Any of the various control elements (e.g., electrical or electronic components) shown in the figures or described herein may be implemented as hardware, a processor implementing software, a processor implementing firmware, or some combination of these. For example, an element may be implemented as dedicated hardware. Dedicated hardware elements may be referred to as "processors", "controllers", or some similar terminology. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, a network processor, application specific integrated circuit (ASIC) or other circuitry, field programmable gate array (FPGA), read only memory (ROM) for storing software, random access memory (RAM), non-volatile storage, logic, or some other physical hardware component or module.

Also, a control element may be implemented as instructions executable by a processor or a computer to perform the functions of the element. Some examples of instructions are software, program code, and firmware. The instructions are operational when executed by the processor to direct the processor to perform the functions of the element. The instructions may be stored on storage devices that are readable by the processor. Some examples of the storage devices are digital or solid-state memories, magnetic storage media such as a magnetic disks and magnetic tapes, hard drives, or optically readable digital data storage media.

## Claims

1. A method of performing an automated validation (202) of a condition of assembly (204) for a structure (206), the method comprising:
registering (702) a plurality of images (218) of the structure (206) to a computer model (236) of the structure (206) in which an image (220) in the plurality of images (218) captures a portion of the structure (206);
segmenting (704) each image in the plurality of images (218) based on registration of the plurality of images (218) to the computer model (236) to form a plurality of image sections (238); and
generating (706) a final score (244) for the condition of assembly (204) of the structure (206) based on whether each image section in the plurality of image sections (238) meets a corresponding condition in which the final score (244) indicates whether the condition of assembly (204) is valid, wherein generating (706) the final score (244) comprises comparing an image section (242) in the plurality of image sections (238) to a corresponding portion of the computer model (236) of the structure (206) to determine whether the image section (242) meets the corresponding condition;
wherein generating (706) the final score (244) comprises:
computing (808) an initial score (245) for the condition of assembly (204) of the structure (206) by computing a percentage of the plurality of image sections (238) that meet the corresponding condition for each respective image section in the plurality of image sections (238);
determining (810) whether or not any invalidating events have been identified; and
adjusting (812) the initial score (245) to create the final score (244) in response to a determination that at least one invalidating event has been identified, wherein the adjusting is made for each invalidating event identified and weighted based on an importance of each invalidating event to the condition of assembly (204) for the structure (206), wherein the at least one invalidating event is that a particular image section (238) does not meet a corresponding condition that is critical to the condition of assembly for the structure.

2. The method of claim 1 further comprising:
generating (902) image data (216) for use in generating the plurality of images (218) of the structure (206) using a sensor system (210), wherein the sensor system (210) comprises a plurality of sensors positioned at a plurality of fixed positions (230) relative to the structure (206).

3. The method of claim 1 or 2 further comprising:
generating (802) the plurality of images (218) of the structure (206) using a sensor system (210) coupled to an automated guided vehicle (222).

4. The method of claim 3, wherein generating the image data (216) comprises:
moving the automated guided vehicle (222) along a predetermined path (224) relative to the structure (206) to allow the sensor system (210) to be moved into a set of positions (226) relative to the structure (206);
generating an image (220) at each position of the set of positions (226) using the sensor system (210).

5. The method of any preceding claim, wherein segmenting (704) each image in the plurality of images (218) comprises:
segmenting the image (220) into a set of image sections (240), wherein an image section (242) in the set of image sections (240) captures a portion of the structure (206) that is expected to have a single feature of interest, wherein the single feature of interest is selected from one of a hole and a fastener installed in the hole.

6. The method of any preceding claim, wherein the corresponding condition is selected from one of a presence of a hole, a presence of a fastener installed in the hole, an absence of a hole, and an absence of the fastener in the hole.

7. The method of any preceding claim, further comprising:
displaying (708) the final score (244) on a graphical user interface (248) on a display system (250).

8. The method of any preceding claim, further comprising:
sending (816) a report (246) that includes the final score (244) to a computerized numerically controlled machine (252) for processing.

9. The method of claim 8, further comprising:
adjusting programming for the computerized numerically controlled machine (252) based on the report (246).

10. An apparatus comprising:
a sensor system (210) configured to generate image data (216) for use in generating a plurality of images (218) of a structure (206) in which an image (220) in the plurality of images (218) captures a portion of the structure (206);
a processor in communication with the sensor system (210), wherein the processor comprises:
an image processing component (215) configured to receive the plurality of images (218), to register the plurality of images (218) to a computer model (236) of the structure (206), and to segment each image in the plurality of images (218) based on registration of the plurality of images (218) to the computer model (236) to form a plurality of image sections (238); and
a comparison component (217) configured to generate a final score (244) for the condition of assembly (204) for the structure (206) based on whether each image section in the plurality of image sections (238) meets a corresponding condition in which the final score (244) indicates whether the condition of assembly (204) is valid, wherein generating the final score (244) comprises comparing an image section (242) in the plurality of image sections (238) to a corresponding portion of the computer model (236) of the structure (206) to determine whether the image section (242) meets the corresponding condition;
wherein generating the final score (244) comprises:
computing (808) an initial score (245) for the condition of assembly (204) of the structure (206) by computing a percentage of the plurality of image sections (238) that meet the corresponding condition for each respective image section in the plurality of image sections (238);
determining (810) whether or not any invalidating events have been identified; and
adjusting (812) the initial score (245) to create the final score (244) in response to a determination that at least one invalidating event has been identified, wherein the adjusting is made for each invalidating event identified and weighted based on an importance of each invalidating event to the condition of assembly (204) for the structure (206), wherein the at least one invalidating event is that a particular image section (238) does not meet a corresponding condition that is critical to the condition of assembly for the structure.

11. The apparatus of claim 10, wherein the sensor system (210) comprises a plurality of sensors positioned in a plurality of fixed positions (230) relative to the structure (206).

12. The apparatus of claim 10 or 11 wherein the sensor system (210) is an imaging system (214) coupled to an automated guided vehicle (222).

13. The apparatus of any of claims 10-12, wherein each image section in the plurality of image sections (238) captures a portion of the structure (206) that is expected to have at least one feature of interest.

14. The apparatus of any of claims 10-13, wherein the corresponding condition for an image section (242) in the plurality of image sections (238) is selected from one of a presence of a hole, a presence of a fastener installed in the hole, an absence of the hole, and an absence of the fastener in the hole.

## Patentansprüche

1. Verfahren zum automatisierten Validieren (202) eines Montagezustands (204) einer Struktur (206), wobei das Verfahren Folgendes aufweist:
Registrieren (702) einer Vielzahl von Bildern (218) der Struktur (206) mit einem Computermodell (236) der Struktur (206), wobei ein Bild (220) der Vielzahl von Bildern (218) einen Abschnitt der Struktur (206) erfasst;
Segmentieren (704) jedes Bildes in der Vielzahl von Bildern (218) basierend auf der Registrierung der Vielzahl von Bildern (218) mit dem Computermodell (236), um eine Vielzahl von Bildabschnitten (238) zu bilden; und
Erzeugen (706) eines Endwerts (244) für den Montagezustand (204) der Struktur (206) basierend darauf, ob jeder Bildabschnitt in der Vielzahl von Bildabschnitten (238) eine entsprechende Bedingung erfüllt, wobei der Endwert (244) anzeigt, ob der Montagezustand (204) gültig ist, wobei das Erzeugen (706) des Endwerts (244) das Vergleichen eines Bildabschnitts (242) in der Vielzahl von Bildabschnitten (238) mit einem entsprechenden Abschnitt des Computermodells (236) der Struktur (206) aufweist, um zu bestimmen, ob der Bildabschnitt (242) die entsprechende Bedingung erfüllt;
wobei das Erzeugen (706) des Endwerts (244) aufweist:
Berechnen (808) eines Anfangswerts (245) für den Montagezustand (204) der Struktur (206) durch Berechnen eines Prozentsatzes der Vielzahl von Bildabschnitten (238), die die entsprechende Bedingung für ihren jeweiligen Bildabschnitt (238) erfüllen;
Bestimmen (810), ob ungültigmachende Ereignisse identifiziert wurden; und
Anpassen (812) des Anfangswerts (245) zur Erzeugung des Endwerts (244) als Reaktion auf die Feststellung, dass mindestens ein ungültigmachendes Ereignis identifiziert wurde, wobei die Anpassung für jedes identifizierte ungültigmachende Ereignis vorgenommen und basierend auf der Bedeutung jedes ungültigmachenden Ereignisses für den Montagezustand (204) der Struktur (206) gewichtet wird, wobei das mindestens eine ungültigmachende Ereignis darin besteht, dass ein bestimmter Bildabschnitt (238) die entsprechende Bedingung, die für den Montagezustand der Struktur kritisch ist, nicht erfüllt.

2. Verfahren nach Anspruch 1, ferner aufweisend:
Erzeugen (902) von Bilddaten (216) zur Verwendung bei der Erzeugung der Vielzahl von Bildern (218) der Struktur (206) mittels eines Sensorsystems (210), wobei das Sensorsystem (210) eine Vielzahl von Sensoren aufweist, die in einer Vielzahl von festen Positionen (230) relativ zur Struktur (206) angeordnet sind.

3. Verfahren nach Anspruch 1 oder 2, ferner aufweisend:
Erzeugen (802) der Vielzahl von Bildern (218) der Struktur (206) mittels eines Sensorsystems (210), das an ein automatisiertes Führungsfahrzeug (222) gekoppelt ist.

4. Verfahren nach Anspruch 3, wobei das Erzeugen der Bilddaten (216) aufweist:
Bewegen des automatisierten Führungsfahrzeugs (222) entlang eines vorbestimmten Pfads (224) relativ zur Struktur (206), um das Sensorsystem (210) in eine Reihe von Positionen (226) relativ zur Struktur (206) zu bringen;
Erzeugen eines Bildes (220) an jeder Position der Reihe von Positionen (226) mittels des Sensorsystems (210).

5. Verfahren nach einem der vorhergehenden Ansprüche, wobei das Segmentieren (704) jedes Bildes in der Vielzahl von Bildern (218) aufweist:
Segmentieren des Bildes (220) in eine Reihe von Bildabschnitten (240), wobei ein Bildabschnitt (242) in der Reihe von Bildabschnitten (240) einen Abschnitt der Struktur (206) erfasst, von dem erwartet wird, dass er ein einzelnes Merkmal von Interesse aufweist, wobei das einzelne Merkmal von Interesse aus einem Loch und einem in dem Loch installierten Befestigungselement ausgewählt ist.

6. Verfahren nach einem der vorhergehenden Ansprüche, wobei die entsprechende Bedingung aus Folgendem ausgewählt ist: Vorhandensein eines Lochs, Vorhandensein eines in dem Loch installierten Befestigungselements, Fehlen eines Lochs und Fehlen des Befestigungselements im Loch.

7. Verfahren nach einem der vorhergehenden Ansprüche, ferner aufweisend:
Anzeigen (708) des Endwerts (244) auf einer grafischen Benutzerschnittstelle (248) auf einer Anzeigevorrichtung (250).

8. Verfahren nach einem der vorhergehenden Ansprüche, ferner aufweisend:
Senden (816) eines Berichts (246), der den Endwert (244) aufweist, an eine numerisch gesteuerte Werkzeugmaschine (252) zur Verarbeitung.

9. Verfahren nach Anspruch 8, ferner aufweisend:
Anpassen der Programmierung der numerisch gesteuerten Werkzeugmaschine (252) basierend auf dem Bericht (246).

10. Vorrichtung, aufweisend:
ein Sensorsystem (210), konfiguriert, Bilddaten (216) zur Verwendung bei der Erzeugung einer Vielzahl von Bildern (218) einer Struktur (206) zu erzeugen, wobei ein Bild (220) in der Vielzahl von Bildern (218) einen Abschnitt der Struktur (206) erfasst;
einen Prozessor in Kommunikation mit dem Sensorsystem (210), wobei der Prozessor aufweist:
eine Bildverarbeitungskomponente (215), konfiguriert, die Vielzahl von Bildern (218) zu empfangen, die Vielzahl von Bildern (218) mit einem Computermodell (236) der Struktur (206) zu registrieren und jedes Bild in der Vielzahl von Bildern (218) basierend auf der Registrierung mit dem Computermodell (236) zu segmentieren, um eine Vielzahl von Bildabschnitten (218) zu bilden; und
eine Vergleichskomponente (217), konfiguriert, einen Endwert (244) für den Montagezustand (204) der Struktur (206) zu erzeugen, basierend darauf, ob jeder Bildabschnitt in der Vielzahl von Bildabschnitten (238) eine entsprechende Bedingung erfüllt, wobei der Endwert (244) anzeigt, ob der Montagezustand (204) gültig ist, wobei das Erzeugen des Endwerts (244) das Vergleichen eines Bildabschnitts (242) in der Vielzahl von Bildabschnitten (238) mit einem entsprechenden Abschnitt des Computermodells (236) der Struktur (206) aufweist, um zu bestimmen, ob der Bildabschnitt (242) die entsprechende Bedingung erfüllt;
wobei das Erzeugen des Endwerts (244) aufweist:
Berechnen (808) eines Anfangswerts (245) für den Montagezustand (204) der Struktur (206) durch Berechnen eines Prozentsatzes der Vielzahl von Bildabschnitten (238), die die entsprechende Bedingung für ihren jeweiligen Bildabschnitt erfüllen;
Bestimmen (810), ob ungültigmachende Ereignisse identifiziert wurden; und
Anpassen (812) des Anfangswerts (245) zur Erzeugung des Endwerts (244) als Reaktion auf die Feststellung, dass mindestens ein ungültigmachendes Ereignis identifiziert wurde, wobei die Anpassung für jedes identifizierte ungültigmachende Ereignis vorgenommen und basierend auf der Bedeutung jedes ungültigmachenden Ereignisses für den Montagezustand (204) der Struktur (206) gewichtet wird, wobei das mindestens eine ungültigmachende Ereignis darin besteht, dass ein bestimmter Bildabschnitt (238) die entsprechende Bedingung, die für den Montagezustand der Struktur kritisch ist, nicht erfüllt.

11. Vorrichtung nach Anspruch 10, wobei das Sensorsystem (210) eine Vielzahl von Sensoren aufweist, die in einer Vielzahl von festen Positionen (230) relativ zur Struktur (206) angeordnet sind.

12. Vorrichtung nach Anspruch 10 oder 11, wobei das Sensorsystem (210) ein Bildgebungssystem (214) ist, das an ein automatisiertes Führungsfahrzeug (222) gekoppelt ist.

13. Vorrichtung nach einem der Ansprüche 10-12, wobei jeder Bildabschnitt in der Vielzahl von Bildabschnitten (238) einen Abschnitt der Struktur (206) erfasst, von dem erwartet wird, dass er mindestens ein Merkmal von Interesse aufweist.

14. Vorrichtung nach einem der Ansprüche 10-13, wobei die entsprechende Bedingung für einen Bildabschnitt (242) in der Vielzahl von Bildabschnitten (238) aus Folgendem ausgewählt ist: Vorhandensein eines Lochs, Vorhandensein eines in dem Loch installierten Befestigungselements, Fehlen eines Lochs und Fehlen des Befestigungselements im Loch.

## Revendications

1. Procédé de réalisation d'une validation automatisée (202) d'un état d'assemblage (204) pour une structure (206), le procédé comprenant :
l'enregistrement (702) d'une pluralité d'images (218) de la structure (206) sur un modèle informatique (236) de la structure (206) dans lequel une image (220) de la pluralité d'images (218) capture une partie de la structure (206) ;
la segmentation (704) de chaque image de la pluralité d'images (218) sur la base de l'enregistrement de la pluralité d'images (218) sur le modèle informatique (236) pour former une pluralité de sections d'image (238) ; et
la génération (706) d'un score final (244) pour l'état d'assemblage (204) de la structure (206) sur la base du fait que chaque section d'image dans la pluralité de sections d'image (238) répond à un état correspondant dans lequel le score final (244) indique si l'état d'assemblage (204) est valide, dans lequel la génération (706) du score final (244) comprend la comparaison d'une section d'image (242) dans la pluralité de sections d'image (238) à une partie correspondante du modèle informatique (236) de la structure (206) pour déterminer si la section d'image (242) répond à l'état correspondant ;
dans lequel la génération (706) du score final (244) comprend :
le calcul (808) d'un score initial (245) pour l'état d'assemblage (204) de la structure (206) en calculant un pourcentage de la pluralité de sections d'images (238) qui répondent à l'état correspondant pour chaque section d'image respective dans la pluralité de sections d'image (238) ;
le fait de déterminer (810) si des événements invalidants ont été identifiés ou non ; et
l'ajustement (812) du score initial (245) pour créer le score final (244) en réponse à une détermination qu'au moins un événement invalidant a été identifié, dans lequel l'ajustement est effectué pour chaque événement invalidant identifié et pondéré sur la base d'une l'importance de chaque événement invalidant pour l'état d'assemblage (204) de la structure (206), dans lequel l'au moins un événement invalidant est qu'une section d'image particulière (238) ne répond pas à un état correspondant qui est critique pour l'état d'assemblage de la structure.

2. Procédé selon la revendication 1, comprenant en outre :
la génération (902) de données d'image (216) destinées à être utilisées pour générer la pluralité d'images (218) de la structure (206) à l'aide d'un système de capteurs (210), dans lequel le système de capteurs (210) comprend une pluralité de capteurs positionnés à une pluralité de positions fixes (230) par rapport à la structure (206).

3. Procédé selon la revendication 1 ou 2, comprenant en outre :
la génération (802) de la pluralité d'images (218) de la structure (206) à l'aide d'un système de capteurs (210) couplé à un véhicule à guidage automatique (222).

4. Procédé selon la revendication 3, dans lequel la génération des données d'image (216) comprend :
le déplacement du véhicule à guidage automatique (222) le long d'un chemin prédéterminé (224) par rapport à la structure (206) pour permettre au système de capteurs (210) d'être placé dans un ensemble de positions (226) par rapport à la structure (206) ;
la génération d'une image (220) à chaque position de l'ensemble de positions (226) à l'aide du système de capteurs (210).

5. Procédé selon l'une quelconque revendication précédente, dans lequel la segmentation (704) de chaque image dans la pluralité d'images (218) comprend :
la segmentation de l'image (220) en un ensemble de sections d'image (240), dans lequel une section d'image (242) dans l'ensemble de sections d'image (240) capture une partie de la structure (206) qui est censée avoir une caractéristique unique d'intérêt, dans lequel la caractéristique unique d'intérêt est choisie parmi un trou et une fixation installée dans le trou.

6. Procédé selon l'une quelconque revendication précédente, dans lequel la condition correspondante est choisie parmi une présence d'un trou, une présence d'une fixation installée dans le trou, l'absence d'un trou et l'absence de la fixation dans le trou.

7. Procédé selon l'une quelconque revendication précédente, comprenant en outre :
l'affichage (708) du score final (244) sur une interface utilisateur graphique (248) d'un système d'affichage (250).

8. Procédé selon l'une quelconque revendication précédente, comprenant en outre :
l'envoi (816) d'un rapport (246) qui comporte le score final (244) à une machine à commande numérique informatisée (252) pour traitement.

9. Procédé selon la revendication 8, comprenant en outre :
l'ajustement de la programmation de la machine à commande numérique informatisée (252) sur la base du rapport (246).

10. Appareil comprenant :
un système de capteurs (210) configuré pour générer des données d'image (216) destinées à être utilisées pour générer une pluralité d'images (218) d'une structure (206) dans laquelle une image (220) de la pluralité d'images (218) capture une partie de la structure (206) ;
un processeur en communication avec le système de capteurs (210), dans lequel le processeur comprend :
un composant de traitement d'images (215) configuré pour recevoir la pluralité d'images (218), pour enregistrer la pluralité d'images (218) sur un modèle informatique (236) de la structure (206), et pour segmenter chaque image de la pluralité d'images (218) sur la base de l'enregistrement de la pluralité d'images (218) sur le modèle informatique (236) pour former une pluralité de sections d'image (238) ; et
un composant de comparaison (217) configuré pour générer un score final (244) pour l'état d'assemblage (204) de la structure (206) sur la base du fait que chaque section d'image dans la pluralité de sections d'image (238) répond à un état correspondant dans lequel le score final (244) indique si l'état d'assemblage (204) est valide, dans lequel la génération du score final (244) comprend la comparaison d'une section d'image (242) dans la pluralité de sections d'image (238) à une partie correspondante du modèle informatique (236) de la structure (206) pour déterminer si la section d'image (242) répond à l'état correspondant ;
dans lequel la génération du score final (244) comprend :
le calcul (808) d'un score initial (245) pour l'état d'assemblage (204) de la structure (206) en calculant un pourcentage de la pluralité de sections d'images (238) qui répondent à l'état correspondant pour chaque section d'image respective dans la pluralité de sections d'image (238) ;
le fait de déterminer (810) si des événements invalidants ont été identifiés ou non ; et
l'ajustement (812) du score initial (245) pour créer le score final (244) en réponse à une détermination qu'au moins un événement invalidant a été identifié, dans lequel l'ajustement est effectué pour chaque événement invalidant identifié et pondéré sur la base d'une l'importance de chaque événement invalidant pour l'état d'assemblage (204) de la structure (206), dans lequel l'au moins un événement invalidant est qu'une section d'image particulière (238) ne répond pas à un état correspondant qui est critique pour l'état d'assemblage de la structure.

11. Appareil selon la revendication 10, dans lequel le système de capteurs (210) comprend une pluralité de capteurs placés dans une pluralité de positions fixes (230) par rapport à la structure (206).

12. Appareil selon la revendication 10 ou 11 dans lequel le système de capteurs (210) est un système d'imagerie (214) couplé à un véhicule à guidage automatique (222).

13. Appareil selon l'une quelconque des revendications 10 à 12, dans lequel chaque section d'image de la pluralité de sections d'image (238) capture une partie de la structure (206) qui est censée présenter au moins une caractéristique d'intérêt.

14. Appareil selon l'une quelconque des revendications 10 à 13,
dans lequel la condition correspondante pour une section d'image (242) dans la pluralité de sections d'image (238) est sélectionnée parmi une présence d'un trou, une présence d'une fixation installée dans le trou, une absence de trou et une absence de la fixation dans le trou.
